(19) Europäisches Patentamt
European Patent Office
Office européen des brevets

(11) **EP 2 891 334 B1**

(12) **EUROPÄISCHE PATENTSCHRIFT**

(45) Veröffentlichungstag und Bekanntmachung des Hinweises auf die Patenterteilung:
**08.03.2017** **Patentblatt 2017/10**

(21) Anmeldenummer: **13753440.0**

(22) Anmeldetag: **29.08.2013**

(51) Int Cl.:
**H04S 5/00** *(2006.01)* **H04L 29/06** *(2006.01)*
**H04S 7/00** *(2006.01)*

(86) Internationale Anmeldenummer:
**PCT/EP2013/067921**

(87) Internationale Veröffentlichungsnummer:
**WO 2014/033222 (06.03.2014 Gazette 2014/10)**

(54) **ERZEUGUNG VON MEHRKANALTON AUS STEREO-AUDIOSIGNALEN**

PRODUCING A MULTICHANNEL SOUND FROM STEREO AUDIO SIGNALS

GÉNÉRATION DE SON MULTIVOIES À PARTIR DE SIGNAUX AUDIO STÉRÉO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2012 DE 102012017296**

(43) Veröffentlichungstag der Anmeldung:
**08.07.2015** **Patentblatt 2015/28**

(73) Patentinhaber:
• **Helmut-Schmidt-Universität/ Universität der Bundeswehr Hamburg**
**22043 Hamburg (DE)**
• **Hamburg Innovation GmbH**
**21079 Hamburg (DE)**

(72) Erfinder:
• **MIETH, Martin**
**04159 Leipzig (DE)**
• **ZÖLZER, Udo**
**21629 Neu Wulmstorf (DE)**

(74) Vertreter: **Maiwald Patentanwalts GmbH Elisenhof**
**Elisenstrasse 3**
**80335 München (DE)**

(56) Entgegenhaltungen:
**US-B1- 7 567 845**

• **AVENDANO CARLOS ET AL: "A Frequency-Domain Approach to Multichannel Upmix", JAES, AES, 60 EAST 42ND STREET, ROOM 2520 NEW YORK 10165-2520, USA, Bd. 52, Nr. 7/8, 1. Juli 2004 (2004-07-01) , Seiten 740-749, XP040507108,**
• **COBOS MAXIMO ET AL: "Interactive Enhancement of Stereo Recordings Using Time-Frequency Selective Panning", CONFERENCE: 40TH INTERNATIONAL CONFERENCE: SPATIAL AUDIO: SENSE THE SOUND OF SPACE; OCTOBER 2010, AES, 60 EAST 42ND STREET, ROOM 2520 NEW YORK 10165-2520, USA, 8. Oktober 2010 (2010-10-08), XP040567113,**
• **GOODWIN M M ET AL: "Primary-Ambient Signal Decomposition and Vector-Based Localization for Spatial Audio Coding and Enhancement", 2007 IEEE INTERNATIONAL CONFERENCE ON ACOUSTICS, SPEECH, AND SIGNAL PROCESSING 15-20 APRIL 2007 HONOLULU, HI, USA, IEEE, PISCATAWAY, NJ, USA, 15. April 2007 (2007-04-15), Seiten I-9, XP031462785, ISBN: 978-1-4244-0727-9**
• **CHUN C J ET AL: "Upmixing stereo audio into 5.1 channel audio for improving audio realism", COMMUNICATIONS IN COMPUTER AND INFORMATION SCIENCE, SPRINGER, DE, Bd. 61, 1. Januar 2009 (2009-01-01), Seiten 228-235, XP009140631, ISSN: 1865-0929, DOI: 10.1007/978-3-642-10546-3_28**

- **BAEK YONG-HYUN ET AL: "Efficient Primary-Ambient Decomposition Algorithm for Audio Upmix", AES CONVENTION 133; 20121001, AES, 60 EAST 42ND STREET, ROOM 2520 NEW YORK 10165-2520, USA, 25. Oktober 2012 (2012-10-25), XP040574805,**
- **AVENDANO C: "Frequency-domain source identification and manipulation in stereo mixes for enhancement, suppression and re-panning applications", APPLICATIONS OF SIGNAL PROCESSING TO AUDIO AND ACOUSTICS, 2003 IEEE WO RKSHOP ON. NEW PALTZ, NY, USA OCT,. 19-22, 2003, PISCATAWAY, NJ, USA,IEEE, 19. Oktober 2003 (2003-10-19), Seiten 55-58, XP010696451, DOI: 10.1109/ASPAA.2003.1285818 ISBN: 978-0-7803-7850-6**

**Beschreibung**

GEBIET DER ERFINDUNG

Die Erfindung betrifft ein Verfahren zum Bearbeiten und Aufwerten eines Stereoaudiosignals. Insbesondere betrifft die Erfindung ein Verfahren zum Erzeugen eines Mehrkanalaudiosignals aus einem Stereoaudiosignal.

TECHNISCHER HINTERGRUND DER ERFINDUNG

Stereoaudiosignale und Vorrichtungen zur Wiedergabe von Stereoaudiosignalen zeichnen sich dadurch aus, dass einem Hörer der Stereoaudiodaten bzw. Stereoaudioinformationen über zwei Audiokanäle unterschiedliche Audioinformationen zur Verfügung gestellt werden, so dass sich bei dem Hörer der Eindruck eines räumlichen Klangerlebnisses einstellt. Mehrkanalaudiosysteme zeichnen sich dadurch aus, dass sie einem Hörer eine Mehrzahl, insbesondere mehr als zwei, Audiosignale zur Verfügung stellen, um so ein räumliches Hörerlebnis zu verbessern. Bekannt sind Mehrkanalaudiosysteme beispielsweise mit fünf oder sieben Schallquellen, welche in einer vorgegebenen Anordnung um den Hörer anzuordnen sind, um so ein optimales räumliches Klangerlebnis zu ermöglichen. Dabei werden dem Hörer über die verschiedenen Kanäle beispielsweise ein Direktsignal und mehrere Umgebungssignale zur Verfügung gestellt, so dass sich bei dem Hörer der Eindruck ergibt, inmitten einer Vielzahl von in einer bestimmten Weise angeordneten Schallquellen zu sein.

ZUSAMMENFASSUNG DER ERFINDUNG

Es ist ein Verfahren und eine Vorrichtung gemäß den Merkmalen der unabhängigen Patentansprüche angegeben. Weiterbildungen der Erfindung ergeben sich aus den abhängigen Ansprüchen sowie aus der nachfolgenden Beschreibung.

Merkmale, die im Zusammenhang mit dem Verfahren beschrieben sind, treffen in analoger Weise auch auf die Vorrichtung zu.

Es kann als eine Aufgabe der Erfindung angesehen werden, ein alternatives und verbessertes Verfahren zum Erzeugen eines Mehrkanalaudiosignals aus einem Stereoaudiosignal sowie eine Vorrichtung zum Ausführen dieses Verfahrens anzugeben.

Das im Dokument XP040507108 (AVENDANO CARLOS ET AL: "A Frequency-Domain Approach to Multichannel Upmix", JAES, AES, 60 EAST 42ND STREET, ROOM 2520 NEW YORK 10165-2520, USA, Bd. 52, Nr. 7/8, 1. Juli 2004, Seiten 740-749) beschriebene Verfahren zur Erzeugung von Mehrkanalaudiosignalen aus einem Stereosignal offenbart die Merkmale des Verfahrens nach Anspruch 1, welche zur Bestimmung eines ersten und zweiten Panning-Koeffizienten und Repanning-Koeffizienten führen. Eine Bestimmung weiterer Panning-Koeffizienten, wie in der vorliegenden Erfindung offenbart, ist diesem Verfahren nach Avendano nicht zu entnehmen. Gleiches gilt für die Offenbarung der Patentschrift US 7 567 845 B1 (AVENDANO CARLOS M [US] ET AL, 28. Juli 2009).

Das Dokument XP009140631 (CHUN C J ET AL: "Upmixing stereo audio into 5.1 channel audio for improving audio realism", COMMUNICATIONS IN COMPUTER AND INFORMATION SCIENCE, SPRINGER, DE, Bd. 61, 1. Januar 2009, Seiten 228-235, ISSN: 1865-0929, DOI: 10.1007/978-3-642-10546-3_28) offenbart ein Verfahren zur Erzeugung eines Tieftonkanals aus einem Stereosignal.

Das Dokument XP031462785 (GOODWIN M M ET AL: "Primary-Ambient Signal Decomposition and Vector-Based Localization for Spatial Audio Coding and Enhancement", 2007 IEEE INTERNATIONAL CONFERENCE ON ACOUSTICS, SPEECH, AND SIGNAL PROCESSING 15-20 APRIL 2007 HONOLULU, HI, USA, IEEE, PISCATAWAY, NJ, USA, 15. April 2007 (2007-04-15), Seiten I-9, ISBN: 978-1-4244-0727-9) offenbart ein Verfahren zur Trennung von Direktschallsignalen und Umgebungssignalen bei der Erzeugung von Mehrkanalaudiosignalen aus einem Stereosignal.

Gemäß einem ersten Aspekt der Erfindung ist ein Verfahren zum Erzeugen eines Mehrkanalaudiosignals aus einem Stereoaudiosignal angegeben, wobei das Stereoaudiosignal ein erstes Audiosignal für eine linke Wiedergabeeinrichtung und ein zweites Audiosignal für eine rechte Wiedergabeeinrichtung aufweist. Das Verfahren weist die im Anspruch 1 angegebenen Schritte auf.

Das Verfahren wie oben und im Folgenden beschrieben kann beispielsweise angewandt werden, um aus auf einem Datenträger vorliegenden Stereoaudiosignalen oder aus über ein drahtgebundenes oder drahtloses Datennetz übertragenen Stereoaudiosignalen eine Aufwertung zu einem Mehrkanalaudiosignal vorzunehmen. Ebenso kann das Verfahren dazu dienen, Stereoaudiosignale während einer Berechnungsphase in ein Mehrkanalaudiosignal aufzuwerten, wobei in der Berechnungsphase beispielsweise das Mehrkanalaudiosignal lediglich für eine sich an die Berechnungsphase anschließende Wiedergabephase auf einem Datenträger gespeichert werden kann, d.h. dass auf eine direkte und unmittelbare Wiedergabe des erzeugten Mehrkanalaudiosignals in der Berechnungsphase verzichtet werden kann. Alternativ dazu kann die Aufwertung eines Stereoaudiosignals in Echtzeit für die unmittelbare Wiedergabe als Mehrkanalaudiosignal erfolgen, beispielsweise wenn ein Audiosignal als Stereoaudiosignal übertragen wird oder vorliegt, wie zum Beispiel ein Radiosignal oder ein Tonsignal einer Fernsehübertragung oder einer sonstigen Video- oder Audio- oder kombinierten Video-/Audioübertragung.

Unter einem Stereoaudiosignal, welches bei dem oben und im Folgenden beschriebenen Verfahren als Ausgangssignal für die Bearbeitung und Verarbeitung, d.h. für die Aufwertung zu einem Mehrkanalaudiosignal, dient, können insbesondere komprimierte oder mit einem beliebigen Kodierungsverfahren kodierte Audiosignale oder Audioinformationen in einem beliebigen für die Übertragung und Wiedergabe von Audioinformationen geeigneten Format verstanden werden. Bei dem Stereoaudiosignal kann es sich beispielsweise um Musik, Sprache oder Umgebungsgeräusche handeln, welche einer Aufnahme einer realen Szene entstammen oder das Ergebnis synthetischer Welten, beispielsweise in computeranimierten Umgebungen oder virtuellen Welten sowie in Computerspielen, sind.

Die Panning-Koeffizienten werden multiplikativ mit jeweils einem Audiosignal des Stereoaudiosignals verrechnet und beeinflussen die Platzierung einer Phantomschallquelle zwischen den vorhandenen Wiedergabeeinrichtungen, d. h. im Falle eines Stereoaudiosignals zwischen den beiden Lautsprechern, welche ausgeführt sind, das Stereoaudiosignal wiederzugeben.

Zur Aufwertung des Stereoaudiosignals in ein Mehrkanalaudiosignal sind zunächst die Panning-Koeffizienten des Stereoaudiosignals zu ermitteln, um dann aus dem Stereoaudiosignal ein Direktsignal und zumindest ein Umgebungssignal, beispielsweise zwei Umgebungssignale, vier Umgebungssignale oder sechs oder mehr Umgebungssignale, zu ermitteln oder zu extrahieren. Hierbei wird das erste Audiosignal, das zweite Audiosignal sowie der erste Panning-Koeffizient und der zweite Panning-Koeffizient zugrunde gelegt, wie dies weiter unten detailliert beschrieben wird.

Ein Stereoaudiosignal weist zwei Panning-Koeffizienten auf, da das Stereoaudiosignal aus zwei Audiosignalen besteht. Um eine Aufwertung des Stereoaudiosignals in ein Mehrkanalaudiosignal zu erzielen, muss aus den Panning-Koeffizienten des Stereoaudiosignals eine Mehrzahl von Repanning-Koeffizienten ermittelt werden, wobei jedem Tonkanal des Mehrkanalaudiosignals einer der Repanning-Koeffizienten zugeordnet ist. Beispielsweise kann das Mehrkanalaudiosignal drei Tonkanäle aufweisen, welche für die Platzierung der Phantomschallquelle ausgeführt sind. In diesem Fall müssen drei Repanning-Koeffizienten vorliegen. Allein durch das Vorhandensein von beispielsweise drei Tonkanälen kann im Vergleich zu dem Stereoaudiosignal mit zwei Tonkanälen eine verbesserte Platzierung der Phantomschallquelle erfolgen.

Gemäß einer Ausführungsform der Erfindung weist das Verfahren weiterhin den Schritt auf: Ausgeben jedes Tonkanals an jeweils eine Wiedergabeeinrichtung.

Das Verfahren kann damit ausgeführt sein, die ermittelten Wiedergabesignale direkt an eine Wiedergabeeinrichtung, beispielsweise einen Lautsprecher, auszugeben.

Gemäß einer weiteren Ausführungsform der Erfindung weist das Verfahren weiterhin den Schritt auf: Ausgeben jedes Tonkanals an eine Aufzeichnungseinheit.

Ein Tonkanal kann dabei alternativ oder zusätzlich zu dem Ausgeben an einen Lautsprecher auch an eine Aufzeichnungseinheit ausgegeben werden. Dabei kann die Aufzeichnungseinheit insbesondere dazu dienen, das Mehrkanalaudiosignal für eine spätere Wiedergabe, Aufbereitung oder Weiterverarbeitung zu speichern. Bei einer Aufzeichnungseinheit kann es sich beispielsweise um ein computerlesbares Medium, wie z. B. eine Festplatte, eine CD-ROM, eine DVD-ROM oder einen Flash-Speicher, handeln.

Gemäß einer weiteren Ausführungsform der Erfindung wird vor dem Ausgeben jedes Tonkanals auf jeweils eine Wiedergabeeinrichtung oder an eine Aufzeichnungseinheit eine Leistungsanpassung des Tonkanals so erfolgen, dass jeweils die Leistung des Umgebungssignals in Bezug zu dem verrechneten Direktsignal reduziert wird.

Diese Leistungsanpassung kann insbesondere dann vorteilhaft sein, wenn sich aufgrund von Eigenheiten des Ausgangssignals, d. h. des Stereoaudiosignals, ein Missverhältnis zwischen dem Direktsignal und den Umgebungssignalen ergibt und somit das eine das andere ungünstig übertönen könnte.

Gemäß einer weiteren Ausführungsform der Erfindung wird die Summe des ersten Audiosignals und des zweiten Audiosignals tiefpassgefiltert und stellt damit einen Niederfrequenztonkanal dar, welcher als einer der Tonkanäle des Mehrkanalaudiosignals ausgeführt ist.

Die Niederfrequenztöne eines Stereoaudiosignals ergeben sich im Wesentlichen aus dessen ersten Audiosignal und zweiten Audiosignal, ohne dass diese für die Ermittlung des Niederfrequenztonkanals in ihre Direktsignal- und Umgebungssignalanteile aufgeteilt werden müssen.

Erfindungsgemäß werden ein vierter Panning-Koeffizient und ein fünfter Panning-Koeffizient aus dem ersten Umgebungssignal und aus dem zweiten Umgebungssignal ermittelt, wobei der vierte Panning-Koeffizient und der fünfte Panning-Koeffizient ausgeführt sind, in dem ersten Umgebungssignal und in dem zweiten Umgebungssignal enthaltene Bestandteile des Direktsignals zu ermitteln, wobei jeweils das erste Umgebungssignal und das zweite Umgebungssignal um die in ihnen enthaltenen Bestandteile des Direktsignals reduziert werden. Dabei wird das reduzierte erste Umgebungssignal einem hinteren linken Tonkanal zugeordnet und das reduzierte zweite Umgebungssignal einem hinteren rechten Tonkanal zugeordnet.

Bei einer Mehrkanalaudiokonfiguration bestehend beispielsweise aus drei vorderen Tonkanälen und zwei hinteren Tonkanälen befindet sich damit das Direktsignal lediglich auf den vorderen Tonkanälen, wobei auf den hinteren Tonkanälen, nämlich dem linken hinteren Tonkanal und dem rechten hinteren Tonkanal, lediglich ein Anteil des Umgebungssignals wiedergegeben wird. Für die Platzierung der Phantomschallquelle kommt damit hauptsächlich den vorderen Tonkanälen eine Bedeutung zu.

Der vierte Panning-Koeffizient und der fünfte Panning-Koeffizient ermöglichen eine Verfeinerung der Umgebungssignale, da die Umgebungssignale einen Direktsignalanteil aufweisen, welcher mittels des vierten Panning-Koeffizienten und des fünften Panning-Koeffizienten eliminiert werden kann.

Gemäß einer weiteren Ausführungsform der Erfindung sind der vierte Panning-Koeffizient und der fünfte Panning-Koeffizient ausgeführt, in dem ersten Umgebungssignal und in dem zweiten Umgebungssignal enthaltene Bestandteile eines sechsten Umgebungssignals und eines siebten Umgebungssignals zu ermitteln, wobei das sechste Umgebungssignal und das siebte Umgebungssignal jeweils einem weiteren Tonkanal des Mehrkanalaudiosignals entsprechen.

Damit wird ermöglicht, aus einem Mehrkanalaudiosignal beispielsweise mit fünf Tonkanälen ein Mehrkanalaudiosignal mit sieben Tonkanälen bereitzustellen, wodurch sich das Hörerlebnis bei einem Hörer des Mehrkanalaudiosignals weiter verbessern lassen kann.

Gemäß einer weiteren Ausführungsform der Erfindung werden aus dem reduzierten ersten Umgebungssignal und aus dem reduzierten zweiten Umgebungssignal iterativ der vierte Panning-Koeffizient und der fünfte Panning-Koeffizient ermittelt, wobei vor jeder Iteration der Ermittlung des vierten Panning-Koeffizienten und des fünften Panning-Koeffizienten das erste Umgebungssignal und das zweite Umgebungssignal um die in ihnen enthaltenen Bestandteile des Direktsignals reduziert werden.

Unter einer iterativen Ermittlung bzw. Iteration ist dabei die Durchführung der genannten Operation zu verstehen und die Rückführung der berechneten Ausgangssignale auf den Eingang. Diese Iteration bzw. wiederholte Ermittlung des vierten bzw. fünften Panning-Koeffizienten kann dabei beliebig oft erfolgen, wobei eine höhere Anzahl an Iterationen einer besseren Qualität des so ermittelten Mehrkanalaudiosignals entspricht.

Gemäß einer weiteren Ausführungsform der Erfindung werden der erste Panning-Koeffizient und der zweite Panning-Koeffizient des ersten Audiosignals und des zweiten Audiosignals für eine Vielzahl von Frequenzen des Stereoaudiosignals berechnet.

Damit wird ermöglicht, dass die Phantomschallquellen für Audiosignale verschiedener Frequenzen über die jeweils hierfür berechneten Panning-Koeffizienten und anschließend hieraus ermittelten Repanning-Koeffizienten auch individuell in dem Hörbereich platziert werden können.

Die Panning-Koeffizienten und die Repanning-Koeffizienten können in festen oder variablen Frequenzabständen des Stereoaudiosignals ermittelt werden. Beispielsweise können sämtliche Koeffizienten jeweils in einem festen Frequenzabstand von 10, 20, 50 oder 100 Hz ermittelt werden, sie können allerdings in einem niedrigen Frequenzbereich unter 2000 Hz in einem 50 Hz-Abstand, in einem mittleren Frequenzbereich zwischen 2000 und 8000 Hz in einem 100 Hz-Abstand und in einem hohen Frequenzbereich über 8000 Hz in einem 200 Hz-Abstand berechnet werden. Dabei gilt grundsätzlich, dass mit kleineren Frequenzabständen, in denen die Panning-Koeffizienten und Repanning-Koeffizienten berechnet werden, eine bessere Entdeckung von Phantomschallquellen in dem Stereoaudiosignal ermöglicht werden kann und somit ein qualitativ höherwertiges Mehrkanalaudiosignal bereitgestellt werden kann. In einer beispielhaften Ausführungsform kann der Frequenzabstand 20 Hertz betragen.

Diese Ausführungen gelten selbstverständlich in analoger Weise für sämtliche Schritte des Verfahrens, da diese Schritte des Verfahrens bei einer Neuberechnung der Panning-Koeffizienten und Repanning-Koeffizienten ebenfalls durchgeführt werden.

Gemäß einer weiteren Ausführungsform der Erfindung werden der erste Panning-Koeffizient und der zweite Panning-Koeffizient des ersten Audiosignals und des zweiten Audiosignals jeweils nach einer definierten Zeitspanne wiederkehrend erneut ermittelt.

Dies bedeutet, dass die Schritte des Verfahrens wiederkehrend für jeweils einen Abtastpunkt eines Eingangssignals ausgeführt werden und die für diesen Abtastpunkt zutreffenden Ausgangssignale für das Mehrkanalaudiosignal ermittelt werden. Über einen längeren Zeitraum ergibt sich damit die wiederkehrende und wiederholte Ausführung der Verfahrensschritte für jeden einzelnen Abtastpunkt einer Vielzahl von Abtastpunkten des Eingangssignals, d. h. des Stereoaudiosignals.

Gemäß einem weiteren Aspekt der Erfindung ist ein Verfahren zum Erzeugen eines Mehrkanalaudiosignals aus einem Stereoaudiosignal angegeben, das Verfahren aufweisend die Schritte: Transformieren eines ersten Audiosignals und eines zweiten Audiosignals des Stereoaudiosignals aus dem Zeitbereich in den Frequenzbereich, Durchführen des Verfahrens wie oben beschrieben im Frequenzbereich, Transformieren der Wiedergabesignale aus dem Frequenzbereich in den Zeitbereich.

Die oben beschriebenen Berechnungsoperationen können beispielsweise in dem Frequenzbereich einfacher und schneller ausgeführt werden, so dass sich die Durchführung des Verfahrens in dem Frequenzbereich als vorteilhaft erweisen könnte, indem eine für diese Schritte benötigte Rechenzeit verringert wird.

Gemäß einem weiteren Aspekt der Erfindung ist eine Audiosignalverarbeitungsvorrichtung zum Erzeugen eines Mehrkanalaudiosignals aus einem Stereoaudiosignal mit einem ersten Audiosignal und einem zweiten Audiosignal angegeben, wobei die Audiosignalverarbeitungsvorrichtung die Merkmale gemäß Anspruch 11 aufweist.

Gemäß einer Ausführungsform der Erfindung weist die Audiosignalverarbeitungsvorrichtung weiterhin auf:

eine Stereoaudiosignaltransformationseinheit, welche ausgeführt ist, das Stereoaudiosignal aus dem Zeitbereich in den Frequenzbereich zu transformieren und eine Skalierungseinheit, welche ausgeführt ist, eine Leistungsanpassung jedes Tonkanals der Mehrzahl von Tonkanälen vorzunehmen sowie eine Mehrkanalaudiosignaltransformationseinheit, welche ausgeführt ist, die von der Skalierungseinheit leistungsangepassten Tonkanäle aus dem Frequenzbereich in den Zeitbereich zu transformieren.

Weiterhin ist ein Computerprogrammelement zum Steuern einer Audiosignalverarbeitungsvorrichtung angegeben, wobei das Computerprogrammelement ausgeführt ist, die Audiosignalverarbeitungsvorrichtung anzuweisen, das oben und im Folgenden beschriebene Verfahren auszuführen.

Des Weiteren ist ein computerlesbares Medium angegeben, welches das Computerprogrammelement speichert. Bei dem computerlesbaren Medium kann es sich um sämtliche flüchtigen oder nicht-flüchtigen, von einem Computer lesbare Speicher handeln, beispielsweise um einen Hauptspeicher eines Computers, eine Festplatte oder austauschbare Speichermedien wie z.B. CD-ROMs, DVD-ROMs, USB-Speicher.

KURZE BESCHREIBUNG DER FIGUREN

Fig. 1 zeigt eine Stereoaudiokonfiguration.

Fig. 2 zeigt eine Mehrkanalaudiokonfiguration.

Fig. 3 zeigt eine schematische Darstellung eines Verfahrens gemäß einem Ausführungsbeispiel der Erfindung.

Liste der verwendeten Bezugszeichen

| | |
|---|---|
| 1 | Hörer, Hörerposition |
| 10 | Stereoaudiosignaltransformationseinheit Zeitbereich in Frequenzbereich (STFT) |
| 20 | Panning-Koeffizientenberechnungseinheit |
| 25 | Panning-Koeffizientenberechnungseinheit |
| 30 | Repanning-Koeffizientenberechnungseinheit |
| 40 | Signalextraktionseinheit |
| 42 | Verrechnungseinheit |
| 45 | Signalextraktionseinheit |
| 50 | Skalierungseinheit |
| 51, 52 | Dämpfungsglieder |
| 60 | Schalteinheit zum Festlegen der Iterationsschritte zur Berechnung des vierten und fünften Umgebungssignals |
| 70 | Tiefpassfilter |
| 80 | Mehrkanalaudiosignaltransformationseinheit Frequenzbereich in Zeitbereich (ISTFT) |
| 90 | Ausgangsaudiosignal für ein Stereoaudiosignal |
| 100 | Stereoaudiosignal |
| 110 | erstes Audiosignal |
| 120 | zweites Audiosignal |
| 200 | in den Frequenzbereich transformiertes Stereoaudiosignal |
| 210 | transformiertes erstes Audiosignal |
| 220 | transformiertes zweites Audiosignal |
| 260 | Niederfrequenzaudiosignal |
| 310 | erster Panning-Koeffizient des Stereoaudiosignals |

| | |
|---|---|
| 320 | zweiter Panning-Koeffizient des Stereoaudiosignals |
| 360 | vierter Panning-Koeffizient |
| 370 | fünfter Panning-Koeffizient |
| 410 | erster Repanning-Koeffizient |
| 415 | zweiter Repanning-Koeffizient |
| 420 | dritter Repanning-Koeffizient |
| 510 | erstes Umgebungssignal |
| 515 | Direktsignal |
| 520 | zweites Umgebungssignal |
| 560 | sechstes Umgebungssignal |
| 565 | in dem ersten und zweiten Umgebungssignal enthaltene Direktsignalanteile |
| 570 | siebtes Umgebungssignal |
| 580 | erster Tonkanal |
| 585 | zweiter Tonkanal |
| 590 | dritter Tonkanal |
| 600 | Wiedergabesignale |
| 610 | erstes Wiedergabesignal |
| 615 | zweites Wiedergabesignal |
| 620 | drittes Wiedergabesignal |
| 630 | viertes Wiedergabesignal |
| 640 | fünftes Wiedergabesignal |
| 700 | Tonkanal |
| 710 | erster Tonkanal |
| 715 | zweiter Tonkanal |
| 720 | dritter Tonkanal |
| 730 | vierter Tonkanal |
| 740 | fünfter Tonkanal |
| 760 | Niederfrequenztonkanal |
| 811, 812 | Phantomschallquelle |
| 800, 810, 815, 820, 830, 840, 860 | Wiedergabeeinrichtung, Lautsprecher |
| 890 | Hörbereich |

## DETAILLIERTE BESCHREIBUNG DER FIGUREN

Die Darstellungen in den Figuren sind schematisch und nicht maßstabsgetreu.

Werden in der nachfolgenden Figurenbeschreibung gleiche Bezugsziffern verwendet, so bezeichnen diese gleiche oder ähnliche Elemente.

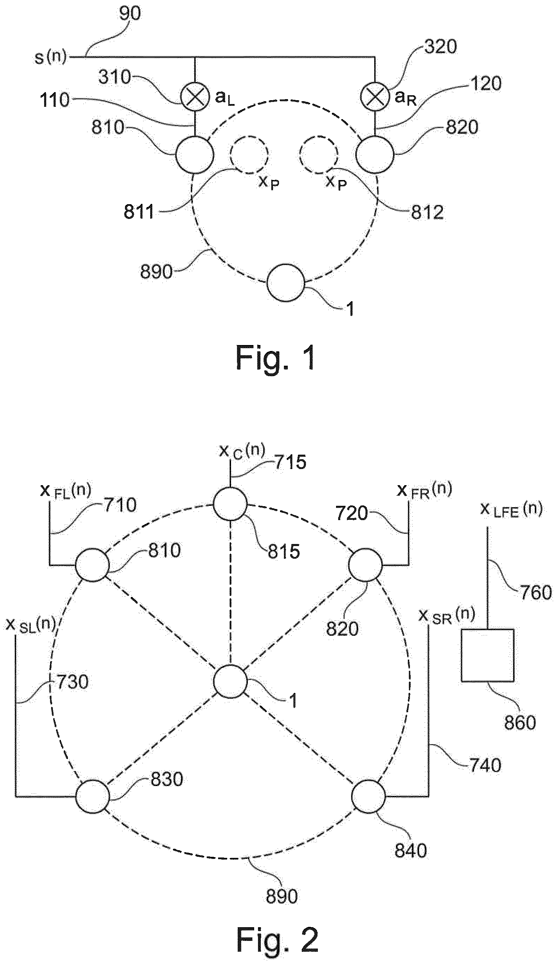

Fig. 1 zeigt die Wirkung der in einem Stereoaudiosignal enthaltenen Panning-Koeffizienten bzw. die Wirkung der Panning-Koeffizienten auf ein Audiosignal sowie die dadurch hervorgerufene Platzierung einer Phantomschallquelle.

Das Ausgangsaudiosignal 90 wird mit einem ersten Panning-Koeffizienten 310 bzw. mit einem zweiten Panning-Koeffizienten 320 verrechnet und wird einem ersten Lautsprecher 810 bzw. einem zweiten Lautsprecher 820 zugeordnet. Aus der Verrechnung des Ausgangsaudiosignals mit den Panning-Koeffizienten 310 bzw. 320 ergibt sich ein erstes Audiosignal 110 bzw. ein zweites Audiosignal 120, welche dem Stereoaudiosignal entsprechen und wobei eine oder mehrere Phantomschallquellen 811, 812 in Abhängigkeit ihrer Frequenz in dem Hörbereich 890 platziert werden können.

Dadurch, dass der erste Lautsprecher 810 ein von dem zweiten Lautsprecher 820 abweichendes Signal wiedergibt, ergibt sich für einen Zuhörer 1 der Eindruck, als sei eine Phantomschallquelle 811, 812 im Hörbereich 890 platziert. Die Platzierung der Phantomschallquellen 811, 812 kann über die Bemessung der Panning-Koeffizienten 310, 320 gesteuert werden.

Wie oben beschrieben, kann über die Ermittlung individueller Panning-Koeffizienten für verschiedene Frequenzen des Stereoaudiosignals 100 dazu beigetragen werden, dass Signale verschiedener Frequenzen individuell in dem Hörbereich 890 platziert werden können. Dies wird durch die getrennt dargestellten Phantomschallquellen 811, 812 verdeutlicht.

Fig. 2 zeigt eine Mehrkanalaudiokonfiguration, wobei ein Zuhörer 1 in dem Hörbereich 890 von fünf Lautsprechern 810, 815, 820, 830, 840 umgeben ist, wobei zusätzlich ein Niederfrequenzlautsprecher 860 abgebildet ist.

Jeder der Lautsprecher wird mit einem jeweils eigenen Wiedergabesignal beaufschlagt. Durch die Anordnung der Lautsprecher um den Zuhörer kann ein räumliches Hörerlebnis im Vergleich zu einer Stereoaudiokonfiguration verbessert werden.

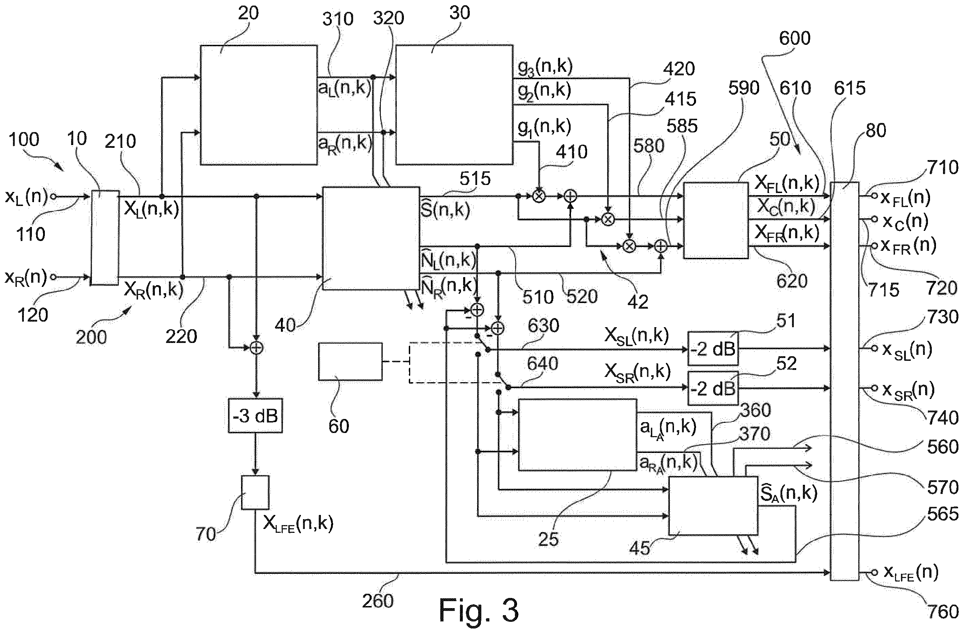

Fig. 3 zeigt ein schematisches Schaltbild des Verfahrens gemäß einem Ausführungsbeispiel der Erfindung.

Die Funktionsweise der einzelnen Blöcke sowie das Zusammenwirken zwischen den Blöcken ergibt sich aus der nachfolgenden detaillierten Beschreibung.

Zunächst werden die beiden durch Abtastung mit der Abtastfrequenz $f_A$ verfügbaren, zeitdiskreten Eingangssignale $x_L(n)$ (linkes Stereo-Audiosignal) und $x_R(n)$ (rechtes Stereo-Audiosignal) aus dem Zeitbereich in den Frequenzbereich transformiert. Die Signale $x_L(n)$ und $x_R(n)$ werden dabei zu $X_L(n,k) = |X_L(n,k)| \cdot e^{j\varphi_L(n,k)}$ und $X_R(n,k) = |X_R(n,k)| \cdot e^{j\varphi_R(n,k)}$ transformiert, wobei $n$ dem Zeitindex und $k$ dem Frequenzindex entspricht.

Anschließend werden die Leistungen der Eingangssignale berechnet. Der Operator $E\{\}$ gilt hier für den Erwartungswert des eingeschlossenen Arguments. Da ein Audiosignal als Zufallssignal beschrieben werden kann und zudem vorzeichenbehaftet ist, beträgt dessen Erwartungswert, welcher dem Mittelwert entspricht (Erwartungswert erster Ordnung), gleich null. Der Erwartungswert zweiter Ordnung eines Audiosignals entspricht hingegen dessen Autokorrelationsfunktion und damit der mittleren Leistung. Die Leistung des linken Eingangssignals $P_{X_L}$ bestimmt sich somit zu

$$P_{X_L}(n,k) = E\{X_L^2(n,k)\} \tag{1}$$

und entspricht der Autokorrelation $r_{LL}(n,k)$ des linken Eingangssignals. Die Leistung des rechten Eingangssignals $P_{X_R}$ bestimmt sich zu

$$P_{X_R}(n,k) = E\{X_R^2(n,k)\} \tag{2}$$

und entspricht der Autokorrelation $r_{RR}(n,k)$ des rechten Eingangssignals. Für die Kreuzkorrelation $r_{LR}(n,k) = r_{RL}(n,k)$ zwischen dem linken und rechten Eingangssignal gilt

$$r_{LR}(n,k) = E\{X_L(n,k) \cdot X_R(n,k)\} \; . \tag{3}$$

Signalmodell:

Um aus einem Stereo-Audiosignal verschiedene Signalkomponenten extrahieren zu können, ist zunächst einmal die Definition eines Signalmodells erforderlich. Dieses Modell wird wie folgt beschrieben:

$$X_L(n,k) = a_L(n,k) \cdot S(n,k) + N_L(n,k)$$
$$X_R(n,k) = a_R(n,k) \cdot S(n,k) + N_R(n,k) \; . \tag{4}$$

Das linke Eingangssignal $X_L(n,k)$ besteht aus dem Direktsignal $S(n,k)$ und dem linken Ambience-Signal $N_L(n,k)$, wobei das Direktsignal mit dem linken Panning-Koeffizienten $a_L(n,k)$ multipliziert wird. Das rechte Eingangssignal $X_R(n,k)$ besteht ebenfalls aus dem Direktsignal $S(n,k)$ und dem rechten Ambience-Signal $N_R(n,k)$, wobei das Direktsignal mit dem rechten Panning-Koeffizienten $a_R(n,k)$ multipliziert wird. Als Direktsignal ist jedes direkt von einer Schallquelle ausgehende Signal zu verstehen. Die Ambience-Signale entsprechen dem Nachhall und den Reflexionen des Direktsignals im Raum und sind somit für einen räumlichen Eindruck über das Stereo-Panorama hinaus ausschlaggebend. Da das Direktsignal $S(n,k)$ entsprechend gewichtet über beide Lautsprecher einer Stereo-Konfiguration wiedergegeben wird, entsteht eine Phantomschallquelle 811, 812 $x_p$, welche beliebig zwischen den beiden Lautsprechern im Hörbereich 890 platziert sein kann, wie dies aus Fig. 1 hervorgeht. Die beiden Panning-Koeffizienten $a_L(n,k)$ und $a_R(n,k)$ bestimmen die Richtung aus welcher die Phantomschallquelle wahrgenommen wird und sind über die Beziehung

$$a_L^2(n,k) + a_R^2(n,k) = 1 \tag{5}$$

miteinander verknüpft.

Mit Hilfe der Signalextraktion sollen nun aus einem Stereo-Audiosignal die beiden Ambience-Signale, sowie das Direktsignal extrahiert werden.

Signalextraktion:

Um aus den Eingangssignalen $X_L(n,k)$ und $X_R(n,k)$ das enthaltene Direktsignal $S(n,k)$ sowie die beiden Ambience-Signale $N_L(n,k)$ und $N_R(n,k)$ zu extrahieren, müssen die Eingangssignale lediglich mit der Extraktionsmatrix $\underline{A}^+(n,k)$ multipliziert werden. Für die geschätzten Signale $\hat{S}(n,k)$, $\hat{N}_L(n,k)$ und $\hat{N}_R(n,k)$ gilt daher:

$$\begin{bmatrix} \hat{S}(n,k) \\ \hat{N}_L(n,k) \\ \hat{N}_R(n,k) \end{bmatrix} = \underline{A}^+(n,k) \cdot \begin{bmatrix} X_L(n,k) \\ X_R(n,k) \end{bmatrix} \qquad (6)$$

mit

$$\underline{A}^+(n,k) = \frac{1}{a_L^2(n,k) + a_R^2(n,k) + r}$$
$$\cdot \begin{bmatrix} a_L(n,k) & a_R(n,k) \\ a_R^2(n,k) + r & -a_L(n,k) \cdot a_R(n,k) \\ -a_L(n,k) \cdot a_R(n,k) & a_L^2(n,k) + r \end{bmatrix} . \qquad (7)$$

Die Extraktionsmatrix $\underline{A}^+(n,k)$ setzt sich aus den beiden Panning-Koeffizienten $a_L(n,k)$ und $a_R(n,k)$ sowie einem variablen Parameter r zusammen.

Bestimmung der Panning-Koeffizienten $a_L(n,k)$ und $a_R(n,k)$:

Zur Extraktion der Signale $\hat{S}(n,k)$, $\hat{N}_L(n,k)$ und $\hat{N}_R(n,k)$ müssen die Panning-Koeffizienten $a_L(n,k)$ und $a_R(n,k)$ bestimmt werden, um die pseudoinverse Matrix $\underline{A}^+(n,k)$ vollständig berechnen zu können. Da die Panning-Koeffizienten in den Eingangssignalen enthalten sind, muss es möglich sein, diese durch eine geschickte Betrachtung der Eingangssignale zu bestimmen. Dazu bietet sich zweckmäßiger Weise die Betrachtung der Leistungen der Eingangssignale an. In anderen Worten ist dazu die Ermittlung einer ersten Leistung des ersten Audiosignals und einer zweiten Leistung des zweiten Audiosignals erforderlich. Die Autokorrelationen $r_{LL}(n,k)$ und $r_{RR}(n,k)$ beschreiben dabei die Leistung der Eingangssignale $X_L(n,k)$ und $X_R(n,k)$. Die Kreuzkorrelation $r_{LR}(n,k)$ beschreibt die Ähnlichkeit der Eingangssignale. Als besonderes Ähnlichkeitsmaß gilt die normierte Kreuzkorrelation. Zur Bestimmung der Panning-Koeffizienten $a_L(n,k)$ und $a_R(n,k)$ wird geschickter Weise die auf die Summe der beiden Autokorrelationen normierte Kreuzkorrelation der Eingangssignale als sogenannte Ähnlichkeitsfunktion $\psi(n,k)$ verwendet:

$$\psi(n,k) = 2 \cdot \frac{r_{LR}(n,k)}{r_{LL}(n,k) + r_{RR}(n,k)} . \qquad (8)$$

In anderen Worten wird die Autokorrelation des ersten Audiosignals und des zweiten Audiosignals sowie die Kreuzkorrelation des ersten Audiosignals und des zweiten Audiosignals bestimmt. Anschließend wird eine Ähnlichkeitsfunktion aus dem Verhältnis der Kreuzkorrelation und der Summe der Autokorrelation des ersten und zweiten Audiosignals ermittelt, wie sich aus Gleichung 8 ergibt.

Alternativ kann dieser letztgenannte Schritt auch dadurch vorgenommen werden, dass die Autokorrelation des ersten Audiosignals oder des zweiten Audiosignals als Erwartungswert des Produktes des ersten bzw. zweiten Audiosignals mit sich selbst ausgedrückt wird. Die Kreuzkorrelation kann als Erwartungswert des Produktes des ersten Audiosignals mit dem zweiten Audiosignal ausgedrückt werden. Damit wird die Ähnlichkeitsfunktion aus dem Verhältnis des Erwartungswertes des Produktes des ersten Audiosignals mit dem zweiten Audiosignal und der Summe des Erwartungswertes des Produktes des ersten Audiosignals mit sich selbst und des Erwartungswertes des Produktes des zweiten Audiosignals mit sich selbst ermittelt.

Der Faktor 2 dient der Normierung. Somit ist sichergestellt, dass $\psi(n,k)$ den Wert eins annimmt, falls beide Eingangssignale die gleiche Leistung besitzen. Der Faktor kann für die nachfolgenden Berechnungen auch vernachlässigt werden. Die Gleichungen ändern sich entsprechend. Die Verwendung der auf das Produkt der beiden Autokorrelationen normierten Kreuzkorrelation hat sich als nicht zielführend erwiesen, da dieser Ausdruck die Gefahr einer Division durch Null birgt, wenn einer der beiden Eingangssignale und damit dessen Leistung gleich Null entspricht. Damit wäre eine korrekte Bestimmung der Panning-Koeffizienten nicht möglich.

Bei geschickter Betrachtung der Gleichung (8) fällt auf, dass diese nicht ausschließlich als das Verhältnis von Leistungen angesehen werden kann. Ersetzt man gemäß den Gleichungen (1) bis (3) die Korrelationen durch die entsprechenden Erwartungswerte, so gilt:

$$\psi(n,k) = 2 \cdot \frac{E\{X_L(n,k) \cdot X_R(n,k)\}}{E\{X_L^2(n,k)\} + E\{X_R^2(n,k)\}} \tag{9}$$

Die Gleichungen (8) und (9) liefern das gleiche Ergebnis, allerdings bietet die Gleichung (9) nun die Möglichkeit zu zeigen, welches Ergebnis die normierte Kreuzkorrelation eigentlich liefert. Betrachtet man die Gleichung (9) und das Signalmodell aus Gleichung (4), so ist es nun möglich, die Eingangssignale gemäß dem Signalmodell umzuformulieren. Da die Panning-Koeffizienten im Signalmodell enthalten sind, sollte sich so ein Ausdruck in Abhängigkeit der Panning-Koeffizienten finden lassen. Demnach gilt:

$$E\{X_L^2(n,k)\} = E\left\{\left(a_L(n,k) \cdot S(n,k) + N_L(n,k)\right)^2\right\}$$

$$= E\{a_L^2(n,k) \cdot S^2(n,k) + N_L^2(n,k) + 2 \cdot a_L(n,k) \cdot S(n,k) \cdot N_L(n,k)\} \tag{10}$$

$$= a_L^2(n,k) \cdot P_S(n,k) + P_N(n,k) \ ,$$

$$E\{X_R^2(n,k)\} = E\left\{\left(a_R(n,k) \cdot S(n,k) + N_R(n,k)\right)^2\right\}$$

$$= E\{a_R^2(n,k) \cdot S^2(n,k) + N_R^2(n,k) + 2 \cdot a_R(n,k) \cdot S(n,k) \cdot N_R(n,k)\} \tag{11}$$

$$= a_R^2(n,k) \cdot P_S(n,k) + P_N(n,k) \ ,$$

$$E\{X_L(n,k) \cdot X_R(n,k)\} = E\{\left(a_L(n,k) \cdot S(n,k) + N_L(n,k)\right)$$

$$\cdot \left(a_R(n,k) \cdot S(n,k) + N_R(n,k)\right)\}$$

$$= E\{a_L(n,k) \cdot a_R(n,k) \cdot S^2(n,k) + a_L(n,k) \cdot S(n,k) \cdot N_R(n,k) + a_R(n,k) \tag{12}$$

$$\cdot S(n,k) \cdot N_L(n,k) + N_L(n,k) \cdot N_R(n,k)\}$$

$$= a_L(n,k) \cdot a_R(n,k) \cdot P_S(n,k) \ .$$

Dabei ist $P_S(n,k)$ die Leistung des Direktsignals sowie $P_N(n,k)$ die Leistung der Ambience-Signale. Es gilt die Annahme, dass $P_{N_L}(n,k)$ als Leistung des linken Ambience-Signals und $P_{N_R}(n,k)$ als Leistung des rechten Ambience-Signals gleich sind. Sie werden daher über $P_N(n,k)$ als Leistung der Ambience-Signale ausgedrückt.

Setzt man die Gleichungen (10) bis (12) in die Gleichung (9) ein, so ergibt sich:

$$\psi(n,k) = 2 \cdot \frac{E\{X_L(n,k) \cdot X_R(n,k)\}}{E\{X_L^2(n,k)\} + E\{X_R^2(n,k)\}}$$

$$= 2 \cdot \frac{a_L(n,k) \cdot a_R(n,k) \cdot P_S(n,k)}{\left(a_L^2(n,k) \cdot P_S(n,k) + P_N(n,k)\right) + \left(a_R^2(n,k) \cdot P_S(n,k) + P_N(n,k)\right)} \quad (13)$$

$$= \frac{2 \cdot a_L(n,k) \cdot a_R(n,k) \cdot P_S(n,k)}{\left(a_L^2(n,k) + a_R^2(n,k)\right) \cdot P_S(n,k) + 2 \cdot P_N(n,k)}$$

$$= \frac{2 \cdot a_L(n,k) \cdot a_R(n,k) \cdot P_S(n,k)}{P_S(n,k) + 2 \cdot P_N(n,k)} \ .$$

Unter der Annahme, dass keine richtungsbehafteten Ambience-Anteile vorhanden sind, ist $P_N(n,k)$ gleich null und die Gleichung (13) vereinfacht sich zu

$$\psi(n,k) = 2 \cdot a_L(n,k) \cdot a_R(n,k) \ . \qquad\qquad (14)$$

Ersetzen des rechten Panning-Koeffizienten über die Beziehung (5) führt auf

$$\psi(n,k) = 2 \cdot a_L(n,k) \cdot \sqrt{1 - a_L^2(n,k)} \ . \qquad\qquad (15)$$

Somit zeigt sich, dass die normierte Kreuzkorrelation gemäß Gleichung (8) einen Ausdruck liefert, welcher lediglich von den Panning-Koeffizienten abhängig ist. Wenn es also möglich ist, weitere Ausdrücke durch geschickte Leistungsbetrachtungen zu finden, in denen die Panning-Koeffizienten enthalten sind, so könnten letztendlich die Panning-Koeffizienten bestimmt werden.

Als weitere nützliche Funktionen werden zwei partielle Ähnlichkeitsfunktionen eingeführt, da diese ebenfalls aus einem Verhältnis von Leistungen bestehen und im Vergleich zur Gleichung (8) leicht variiert sind. Die partiellen Ähnlichkeitsfunktionen bestehen aus der Kreuzkorrelation der beiden Eingangssignale, normiert auf die jeweilige Autokorrelation. Für die linke partielle Ähnlichkeitsfunktion gilt

$$\psi_L(n,k) = \frac{r_{LR}(n,k)}{r_{LL}(n,k)} \qquad\qquad (16)$$

und für die rechte

$$\psi_R(n,k) = \frac{r_{LR}(n,k)}{r_{RR}(n,k)} \ . \qquad\qquad (17)$$

In anderen Worten wird eine erste partielle Ähnlichkeitsfunktion als Verhältnis der Kreuzkorrelation des ersten und zweiten Audiosignals und der Autokorrelation des ersten Audiosignals ermittelt, siehe Gleichung 16. Eine zweite partielle Ähnlichkeitsfunktion wird als Verhältnis der Kreuzkorrelation des ersten und zweiten Audiosignals und der Autokorrelation des zweiten Audiosignals ermittelt, siehe Gleichung 17.

Um einen Ausdruck in Abhängigkeit der Panning-Koeffizienten zu finden, ist es wiederum zweckmäßig, die Autokorrelationen durch die entsprechenden Erwartungswerte zu ersetzen und für die Eingangssignale das Signalmodell gemäß Gleichung (4) zu nutzen. Dies führt unter der Annahme $P_N(n,k) = 0$ auf:

$$\psi_L(n,k) = \frac{E\{X_L(n,k) \cdot X_R(n,k)\}}{E\{X_L^2(n,k)\}}$$

$$= \frac{a_L(n,k) \cdot a_R(n,k) \cdot P_S(n,k)}{a_L^2(n,k) \cdot P_S(n,k) + P_N(n,k)}$$

$$= \frac{a_L(n,k) \cdot a_R(n,k) \cdot P_S(n,k)}{a_L^2(n,k) \cdot P_S(n,k)} \qquad (18)$$

$$= \frac{a_R(n,k)}{a_L(n,k)}$$

und

$$\psi_R(n,k) = \frac{E\{X_L(n,k) \cdot X_R(n,k)\}}{E\{X_R^2(n,k)\}} \qquad (19)$$

$$= \frac{a_L(n,k) \cdot a_R(n,k) \cdot P_S(n,k)}{a_R^2(n,k) \cdot P_S(n,k) + P_N(n,k)}$$

$$= \frac{a_L(n,k) \cdot a_R(n,k) \cdot P_S(n,k)}{a_R^2(n,k) \cdot P_S(n,k)}$$

$$= \frac{a_L(n,k)}{a_R(n,k)} \; .$$

Die partiellen Ähnlichkeitsfunktionen bestehen demnach aus dem Verhältnis der Panning-Koeffizienten. Die Gleichungen (18) und (19) lassen sich zweckmäßiger Weise kombinieren, um so einen gemeinsamen Ausdruck zu finden, welcher geschickt weiterverwendet werden kann. Durch Bilden der Summe oder Differenz der beiden partiellen Ähnlichkeitsfunktionen, ist es möglich den entstehenden Ausdruck auf einen gemeinsamen Nenner zu bringen. Das Bilden der Summe hat sich als nicht zielführende erwiesen. Das Bilden der Differenz $\Delta\psi$ der beiden partiellen Ähnlichkeitsfunktionen und Ausnutzen der Beziehung (5) führt auf:

$$\Delta\psi(n,k) = \psi_L(n,k) - \psi_R(n,k)$$

$$= \frac{a_R(n,k)}{a_L(n,k)} - \frac{a_L(n,k)}{a_R(n,k)}$$

$$= \frac{a_R^2(n,k) - a_L^2(n,k)}{a_L(n,k) \cdot a_R(n,k)}$$

$$= \frac{\left(1 - a_L^2(n,k)\right) - a_L^2(n,k)}{a_L(n,k) \cdot \sqrt{1 - a_L^2(n,k)}}$$

$$= \frac{1 - 2 \cdot a_L^2(n,k)}{a_L(n,k) \cdot \sqrt{1 - a_L^2(n,k)}} \ . \tag{20}$$

Durch Vergleich der Gleichung (20) mit der Gleichung (15) fällt auf, dass der Term $a_L(n,k) \cdot \sqrt{1 - a_L^2(n,k)}$ in der Differenz der beiden partiellen Ähnlichkeitsfunktionen $\Delta\psi(n,k)$ durch die Ähnlichkeitsfunktion $\psi(n,k)$ ersetzt werden kann. Somit vereinfacht sich die Gleichung (20) zu

$$\Delta\psi(n,k) = \frac{1 - 2 \cdot a_L^2(n,k)}{\frac{1}{2} \cdot \psi(n,k)} \ . \tag{21}$$

Dieser Ausdruck lässt sich nach $a_L(n,k)$ auflösen, wobei die negative Lösung entfällt. Die Bestimmungsgleichung für den linken Panning-Koeffizienten lautet demnach

$$a_L(n,k) = \sqrt{\frac{1}{2} - \frac{1}{4} \cdot \Delta\psi(n,k) \cdot \psi(n,k)} \tag{22}$$

und lässt sich vollständig aus den Leistungsbetrachtungen der beiden Eingangssignale $X_L(n,k)$ und $X_R(n,k)$ bestimmen. Der rechte Panning-Koeffizient ergibt sich gemäß der Gleichung (5) zu

$$a_R(n,k) = \sqrt{1 - a_L^2(n,k)} \ . \tag{23}$$

Der erste Panning-Koeffizient wird also basierend auf einer Differenz der ersten und zweiten partiellen Ähnlichkeitsfunktion sowie der Ähnlichkeitsfunktion des ersten und zweiten Audiosignals und der zweite Panning-Koeffizient basierend auf dem ersten Panning-Koeffizienten ermittelt.

Es sei darauf hingewiesen, dass in einer Ausführungsform der zweite Panning-Koeffizient und hierauf basierend dann der erste Panning-Koeffizient ermittelt werden kann. In der Formel 22 ist die Differenz dann durch eine Summe der genannten Operanden zu ersetzen. Ebenso sei darauf hingewiesen, dass die zur Bestimmung der Panning-Koeffizienten notwendige Differenz der ersten und zweiten partiellen Ähnlichkeitsfunktion fallabhängig wird, wie weiter unten mit Bezug zu Gleichung 29 dargestellt wird.

In einer Ausführungsform wird der erste Panning-Koeffizient basierend auf einem Produkt einer Differenz der ersten und zweiten partiellen Ähnlichkeitsfunktion mit einer Ähnlichkeitsfunktion des ersten und zweiten Audiosignals ermittelt.

Das Verfahren wie oben und im Folgenden beschrieben ermöglicht das Erzeugen eines Mehrkanaltons basierend auf einem Stereo-Audiosignal, welches durch das Verfahren in anderen Worten aufgewertet wird (es erfolgt ein sog. Upmix). Durch eine geschickte Betrachtung der zu Grunde liegenden Eingangssignale kann eine ressourcensparende Umrechnung erfolgen, d.h. dass das Verfahren wenig rechenintensiv ist bzw. wenig Rechenzeit eines Rechenprozessors erfordert.

Durch die Berechnung der Differenz $\Delta\psi(n,k)$ der beiden partiellen Ähnlichkeitsfunktionen $\psi_L(n,k)$ und $\psi_R(n,k)$ kann es zum Entstehen unerwünschten Ripple im Signalverlauf kommen. Die somit nicht korrekt bestimmten Panning-Koeffizienten $a_L(n,k)$ und $a_R(n,k)$ würden bei der Wiedergabe der extrahierten Signale in einer Mehrkanalkonfiguration zu Schwankungen in den Richtungen der Phantomschallquellen führen. Daher muss die Differenz der beiden partiellen Ähnlichkeitsfunktionen $\Delta\psi(n,k)$ erneut betrachtet werden. Werden die partiellen Ähnlichkeitsfunktionen $\psi_L(n,k)$ und $\psi_R(n,k)$ durch Korrelationen beschrieben, so gilt:

$$\Delta\psi(n,k) = \frac{r_{LR}(n,k)}{r_{LL}(n,k)} - \frac{r_{LR}(n,k)}{r_{RR}(n,k)} \ . \tag{24}$$

Geht die Amplitude einer der beiden Kanäle des Eingangssignals gegen Null, so nimmt $\Delta\psi(n,k)$ einen Wert sehr viel kleiner ($r_{RR}(n,k)$ geht gegen Null) oder größer ($r_{LL}(n,k)$ geht gegen Null) als Eins an. Dies ist letztendlich für das Entstehen der Ripple verantwortlich. Das Produkt der beiden Autokorrelationen lässt sich mit Hilfe der Gleichungen (10) und (11) schreiben als:

$$r_{LL}(n,k) \cdot r_{RR}(n,k) = \left(a_L^2(n,k) \cdot P_S(n,k) + P_N(n,k)\right)$$
$$\cdot \left(a_R^2(n,k) \cdot P_S(n,k) + P_N(n,k)\right) \ . \tag{25}$$

Unter der Annahme $P_N(n,k) = 0$ wird die Gleichung (25) zu

$$r_{LL}(n,k) \cdot r_{RR}(n,k) = a_L^2(n,k) \cdot a_R^2(n,k) \cdot P_S^2(n,k) \ . \tag{26}$$

Im Vergleich mit der Gleichung (12) erkennt man, dass die Kreuzkorrelation gleich der Wurzel aus dem Produkt der beiden Autokorrelationen ist (für $P_N(n,k) = 0$). Es gilt somit:

$$r_{LR}(n,k) = \sqrt{r_{LL}(n,k) \cdot r_{RR}(n,k)} \ . \tag{27}$$

Diese gefundene Beziehung lässt sich in die Gleichung (24) einsetzen. Entsprechend gilt dann:

$$\begin{aligned} \Delta\psi(n,k) &= \frac{\sqrt{r_{LL}(n,k) \cdot r_{RR}(n,k)}}{r_{LL}(n,k)} - \frac{\sqrt{r_{LL}(n,k) \cdot r_{RR}(n,k)}}{r_{RR}(n,k)} \\ &= \sqrt{\frac{r_{LL}(n,k) \cdot r_{RR}(n,k)}{r_{LL}^2(n,k)}} - \sqrt{\frac{r_{LL}(n,k) \cdot r_{RR}(n,k)}{r_{RR}^2(n,k)}} \\ &= \sqrt{\frac{r_{RR}(n,k)}{r_{LL}(n,k)}} - \sqrt{\frac{r_{LL}(n,k)}{r_{RR}(n,k)}} \ . \end{aligned} \tag{28}$$

Daraus lässt sich mit dem oben beschriebenen Verhalten der Differenz $\Delta\psi(n,k)$ nach Gleichung (24) für die Fälle $r_{LL}(n,k) \geq r_{RR}(n,k)$ und $r_{LL}(n,k) < r_{RR}(n,k)$ folgender korrigierter Ausdruck für $\Delta\psi(n,k)$ finden:

$$\Delta\psi(n,k) = \begin{cases} \psi_L(n,k) - \dfrac{1}{\psi_L(n,k)}, & r_{LL}(n,k) \geq r_{RR}(n,k) \\[2mm] \dfrac{1}{\psi_R(n,k)} - \psi_R(n,k), & r_{LL}(n,k) < r_{RR}(n,k) \end{cases}$$

$$= \begin{cases} \dfrac{r_{LR}(n,k)}{r_{LL}(n,k)} - \dfrac{r_{LL}(n,k)}{r_{LR}(n,k)}, & r_{LL}(n,k) \geq r_{RR}(n,k) \\[2mm] \dfrac{r_{RR}(n,k)}{r_{LR}(n,k)} - \dfrac{r_{LR}(n,k)}{r_{RR}(n,k)}, & r_{LL}(n,k) < r_{RR}(n,k) \end{cases} \tag{29}$$

Somit lässt sich der Verlauf der Panning-Koeffizienten glätten und das Auftreten unerwünschter Ripple verhindern.

Mit Hilfe der bestimmten Panning-Koeffizienten kann die Extraktionsmatrix $\underline{A}^+(n,k)$ vollständig berechnet und die Signalkomponenten $\hat{S}(n,k)$, $\hat{N}_L(n,k)$ und $\hat{N}_R(n,k)$ gemäß der Gleichung (6) extrahiert werden.

Re-panning und Verteilung der extrahierten Signale:

Nachdem das Direktsignal $\hat{S}(n,k)$ sowie die Ambience-Signale $\hat{N}_L(n,k)$ und $\hat{N}_R(n,k)$ bestimmt wurden, müssen diese entsprechend für die Wiedergabe über ein Mehrkanal-Lautsprechersystem aufbereitet und an die einzelnen Lautsprecher verteilt werden. Das Direktsignal $\hat{S}(n,k)$ wird über alle drei vorderen Lautsprecher (vorne links, vorne rechts, vorne Mitte) wiedergegeben und jeweils mit einem der sogenannten paarweisen Panning-Koeffizienten gewichtet. Diese Gewichtungsfaktoren $g_1(n,k)$, $g_2(n,k)$ und $g_3(n,k)$ sind Panning-Koeffizienten, mit denen ein paarweises Panning des Direktsignals durchgeführt wird. Dabei soll die Richtung der Phantomschallquelle in der Mehrkanal-Konfiguration, unter Beachtung des zusätzlichen Center-Lautsprechers, der Richtung der Phantomschallquelle in der ursprünglichen Stereo-Konfiguration entsprechen. Diese Richtung kann mit Hilfe der bestimmten Panning-Koeffizienten $a_L(n,k)$ und $a_R(n,k)$ ermittelt werden. Die Koeffizienten $g_1(n,k)$ und $g_2(n,k)$ sorgen für ein Panning zwischen dem vorderen linken und dem Center-Lautsprecher, die Koeffizienten $g_2(n,k)$ und $g_3(n,k)$ für ein Panning zwischen dem Center- und dem vorderen rechten Lautsprecher. Ist ein Direktsignal vollständig in die Mitte gepannt, so sind $g_1(n,k)$ und $g_3(n,k)$ gleich null, $g_2(n,k)$ ist gleich eins. Ist ein Direktsignal vollständig nach links (oder rechts) gepannt, so sind $g_2(n,k)$ und $g_3(n,k)$ (oder $g_1(n,k)$ und $g_2(n,k)$) gleich null, $g_1(n,k)$ (oder $g_3(n,k)$) ist gleich eins. Ist ein Direktsignal zwischen die Lautsprecher gepannt, so ist immer ein Panning-Koeffizient gleich null, da das paarweise Panning lediglich zwischen Center- und linkem oder rechtem vorderen Lautsprecher durchgeführt wird. Es gilt demnach:

$$g_1(n,k) \cdot g_2(n,k) \cdot g_3(n,k) = 0 \tag{30}$$

Weiterhin bleibt die Regel aus Gleichung (5) erhalten und es gilt:

$$g_1^2(n,k) + g_2^2(n,k) + g_3^2(n,k) = 1 \tag{31}$$

Um die Gewichtungsfaktoren $g_1(n,k)$, $g_2(n,k)$ und $g_3(n,k)$ bestimmen zu können, wird zunächst aus den Panning-Koeffizienten $a_L(n,k)$ und $a_R(n,k)$ der Winkel der Phantomschallquelle $\varphi(n,k)$ zu

$$\varphi(n,k) = \tan^{-1}\left( \frac{a_L(n,k) - a_R(n,k)}{a_L(n,k) + a_R(n,k)} \cdot \tan(\varphi_0(n,k)) \right) \tag{32}$$

bestimmt. Dabei ist $\varphi_0(n,k)$ der Winkel zwischen dem jeweiligen Lautsprecher einer Stereo-Lautsprecherkonfiguration und der von der Hörposition ausgehenden Mittellinie. Der Winkel $\varphi_0(n,k)$ kann zu 30° gesetzt werden. Es ist jedoch jeder andere sinnvolle Winkel möglich, da dieser letztendlich wieder herausgerechnet wird und keinen Einfluss auf die paarweisen Panning-Koeffizienten hat. Der Winkel $\varphi(n,k)$ ist der Winkel zwischen der Phantomschallquelle und der von der Hörposition ausgehenden Mittellinie. Die Gleichung (12) lässt sich auch durch die Verwendung von Sinus-Termen berechnen. Ist die Hörposition bzw. der Kopf des Hörenden allerdings nicht exakt ausgerichtet, so ist die angegebene Beziehung genauer.

Im Folgenden müssen die beiden Fälle $\varphi_0(n,k) \geq \varphi(n,k) \geq 0°$ und $-\varphi_0(n,k) \leq \varphi(n,k) < 0°$ unterschieden werden. Im ersten Fall ist das Direktsignal zwischen dem linken vorderen und dem Center-Lautsprecher gepannt ($g_3(n,k) = 0$), im zweiten Fall zwischen dem rechten vorderen und dem Center-Lautsprecher ($g_2(n,k) = 0$). Zudem wird ein neuer Winkel $\varphi_{0,neu}(n,k)$ eingeführt mit

$$\varphi_{0,neu}(n,k) = \frac{1}{2} \cdot \varphi_0(n,k) \ . \tag{33}$$

Jeder Winkel in dem Bereich $\varphi_0(n,k) \geq \varphi(n,k) \geq 0°$ wird auf den Bereich $\varphi_{0,neu}(n,k) \geq \varphi(n,k) \geq -\varphi_{0,neu}(n,k)$ abgebildet. Eine vollständig nach links gepannte Phantomschallquelle besitzt demnach nicht mehr den Winkel $\varphi_0(n,k)$, sondern $\varphi_{0,neu}(n,k)$. Eine mittig zwischen linkem vorderen und Center-Lautsprecher positionierte Phantomschallquelle besitzt nicht mehr den Winkel $\frac{1}{2} \cdot \varphi_0(n,k)$, sondern 0°. Eine in die Mitte positionierte Phantomschallquelle besitzt nicht mehr den Winkel 0°, sondern $-\varphi_{0,neu}(n,k)$.

Jeder Winkel in dem Bereich $-\varphi_0(n,k) \leq \varphi(n,k) < 0°$ wird auf den Bereich $\varphi_{0,neu}(n,k) > \varphi(n,k) \geq -\varphi_{0,neu}(n,k)$ abgebildet. Eine vollständig nach rechts positionierte Phantomschallquelle besitzt demnach nicht mehr den Winkel $-\varphi_0(n,k)$, sondern $-\varphi_{0,neu}(n,k)$. Eine mittig zwischen rechtem vorderen und Center-Lautsprecher positionierte Phantomschallquelle besitzt nicht mehr den Winkel $-\frac{1}{2} \cdot \varphi_0(n,k)$, sondern 0°. Aus diesen Überlegungen lässt sich der neue Winkel der Phantomschallquelle $\varphi_{neu}(n,k)$ bestimmen. Es gilt

$$\varphi_{neu}(n,k) = \begin{cases} \varphi(n,k) - \varphi_0(n,k) + \varphi_{0,neu}(n,k), & \varphi_0(n,k) \geq \varphi(n,k) \geq 0° \\ \varphi(n,k) + \varphi_0(n,k) - \varphi_{0,neu}(n,k), & -\varphi_0(n,k) \leq \varphi(n,k) < 0° \end{cases} \tag{34}$$

oder mit dem linken Panning-Koeffizienten formuliert:

$$\varphi_{neu}(n,k) = \begin{cases} \varphi(n,k) - \varphi_0(n,k) + \varphi_{0,neu}(n,k), & a_L(n,k) \geq \sqrt{0.5} \\ \varphi(n,k) + \varphi_0(n,k) - \varphi_{0,neu}(n,k), & a_L(n,k) < \sqrt{0.5} \ . \end{cases} \tag{35}$$

Mit Hilfe der Winkel $\varphi_{0,neu}(n,k)$ sowie $\varphi_{neu}(n,k)$ können nun, zunächst unabhängig von den Fallunterscheidungen, zwei nicht näher definierte Panning-Koeffizienten $a'_L(n,k)$ und $a'_R(n,k)$ berechnet werden, welche entweder den Koeffizienten $g_1(n,k)$ und $g_2(n,k)$ oder $g_2(n,k)$ und $g_3(n,k)$ entsprechen. Die Gleichung (32) gilt ebenso für die neuen Winkel $\varphi_{0,neu}(n,k)$ und $\varphi_{neu}(n,k)$ sowie für die Panning-Koeffizienten $a'_L(n,k)$ und $a'_R(n,k)$. Es gilt:

$$\frac{\tan(\varphi_{neu}(n,k))}{\tan(\varphi_{0,neu}(n,k))} = \frac{a'_L(n,k) - a'_R(n,k)}{a'_L(n,k) + a'_R(n,k)} \ . \tag{36}$$

Über Kreuz Multiplizieren ergibt

$$\tan(\varphi_{neu}(n,k)) \cdot a'_L(n,k) + \tan(\varphi_{neu}(n,k)) \cdot a'_R(n,k)$$
$$= \tan(\varphi_{0,neu}(n,k)) \cdot a'_L(n,k) - \tan(\varphi_{0,neu}(n,k)) \cdot a'_R(n,k) \ . \tag{37}$$

Umstellen und Ausklammern liefert

$$a_L' \cdot \left( \tan(\varphi_{neu}) - \tan(\varphi_{0,neu}) \right) = -a_R' \cdot \left( \tan(\varphi_{0,neu}) + \tan(\varphi_{neu}) \right) . \tag{38}$$

Umstellen und Ersetzen des rechten Panning-Koeffizienten über die Beziehung 5 führt auf

$$a_L'(n,k) = \sqrt{1 - a_L'^2(n,k)} \cdot \frac{\left( \tan\left( \varphi_{0,neu}(n,k) \right) + \tan\left( \varphi_{neu}(n,k) \right) \right)}{\left( \tan\left( \varphi_{0,neu}(n,k) \right) - \tan\left( \varphi_{neu}(n,k) \right) \right)} . \tag{39}$$

Mit der Abkürzung

$$b(n,k) = \frac{\left( \tan\left( \varphi_{0,neu}(n,k) \right) + \tan\left( \varphi_{neu}(n,k) \right) \right)}{\left( \tan\left( \varphi_{0,neu}(n,k) \right) - \tan\left( \varphi_{neu}(n,k) \right) \right)} \tag{40}$$

ergibt Quadrieren beider Seiten, Ausmultiplizieren und Umstellen:

$$0 = a_L'^2(n,k) + a_L'^2(n,k) \cdot b^2(n,k) - b^2(n,k)$$

$$= a_L'^2(n,k) \cdot \left( 1 + b^2(n,k) \right) - b^2(n,k) . \tag{41}$$

Umstellen und Auflösen nach $a_L'(n,k)$ liefert schließlich:

$$a_L'(n,k) = \sqrt{\frac{b^2(n,k)}{1 + b^2(n,k)}}$$

$$= \sqrt{\frac{1}{1 + b^{-2}(n,k)}} , \tag{42}$$

wobei die negative Lösung entfällt. Der Koeffizient $a_R'(n,k)$ ergibt sich über die Beziehung (5) zu:

$$a'_R(n,k) = \sqrt{1 - a'^2_L(n,k)}$$

$$= \sqrt{1 - \frac{1}{1 + b^{-2}(n,k)}}$$

$$= \sqrt{\frac{1 + b^{-2}(n,k)}{1 + b^{-2}(n,k)} - \frac{1}{1 + b^{-2}(n,k)}} \tag{43}$$

$$= \sqrt{\frac{b^{-2}(n,k)}{1 + b^{-2}(n,k)}}$$

$$= \sqrt{\frac{1}{1 + b^2(n,k)}} \;.$$

Mit Hilfe der Fallunterscheidungen und den Gleichungen (42) und (43) lassen sich nun die paarweisen Panning-Koeffizienten wie folgt formulieren:

$$g_1(n,k) = \begin{cases} \sqrt{\dfrac{1}{1 + b^{-2}(n,k)}}\,, & a_L(n,k) \geq \sqrt{0.5} \\ 1\,, & a_L(n,k) \geq \sqrt{0.5} \;\; und \;\; \varphi_{neu}(n,k) = \varphi_{0,neu}(n,k) \\ 0\,, & a_L(n,k) < \sqrt{0.5}\,, \end{cases} \tag{44}$$

$$g_2(n,k) = \begin{cases} \sqrt{1 - g_1^2(n,k)}\,, & a_L(n,k) \geq \sqrt{0.5} \\ \sqrt{\dfrac{1}{1 + b^{-2}(n,k)}}\,, & a_L(n,k) < \sqrt{0.5}\,, \end{cases} \tag{45}$$

$$g_3(n,k) = \begin{cases} 0\,, & a_L(n,k) \geq \sqrt{0.5} \\ \sqrt{1 - g_2^2(n,k)}\,, & a_L(n,k) < \sqrt{0.5}\,, \end{cases} \tag{46}$$

Sind in dem Fall $a_L(n,k) \geq \sqrt{0.5}$ die Winkel $\varphi_{neu}(n,k)$ und $\varphi_{0,neu}(n,k)$ identisch (vollständig nach links gepannte Phantomschallquelle), so wird $g_1(n,k)$ zu eins gesetzt, um gemäß der Gleichung (40) eine Division durch null zu vermeiden.

Mit den berechneten paarweisen Panning-Koeffizienten lassen sich nun die geschätzten Signale $\hat{X}_{FL}(n,k)$,

$\hat{X}_{FR}(n,k)$ und $\hat{X}_C(n,k)$ für den linken vorderen, den rechten vorderen und den Center-Lautsprecher erzeugen. Wie bereits erwähnt, wird das Direktsignal $\hat{S}(n,k)$ über alle vorderen drei Lautsprecher wiedergegeben und mit dem jeweiligen Koeffizienten $g_1(n,k)$, $g_2(n,k)$ oder $g_3(n,k)$ gewichtet. Dabei werden die Ambience-Signale $\hat{N}_L(n,k)$ und $\hat{N}_R(n,k)$ zusätzlich auf den linken und rechten vorderen Lautsprecher gegeben, um den räumlichen Eindruck gemäß dem original Stereo-Signal zu erhalten. Weiterhin bestehen ja laut dem Signalmodell die vorderen Kanäle aus dem gepannten Direktsignal und dem jeweiligen Ambience-Anteil. Durch den zusätzlichen Center-Lautsprecher wird ein, im Vergleich zur Stereo-Wiedergabe, wesentlich stabilerer und aufgewerteter Klangeindruck erzielt. Der Center-Lautsprecher enthält lediglich das mit $g_2(n,k)$ gepannte Direktsignal, um die Phantomschallquelle aus dieser Richtung zu betonen. Zudem sind Ambience-Anteile aus dieser Richtung vernachlässigbar. Die drei Lautsprechersignale $\hat{X}_{FL}(n,k)$, $\hat{X}_{FR}(n,k)$ und $\hat{X}_C(n,k)$ ergeben sich demnach zu

$$\begin{bmatrix} \hat{X}_{FL}(n,k) \\ \hat{X}_C(n,k) \\ \hat{X}_{FR}(n,k) \end{bmatrix} = \begin{bmatrix} g_1(n,k) & 1 & 0 \\ g_2(n,k) & 0 & 0 \\ g_3(n,k) & 0 & 1 \end{bmatrix} \cdot \begin{bmatrix} \hat{S}(n,k) \\ \hat{N}_L(n,k) \\ \hat{N}_R(n,k) \end{bmatrix}. \qquad (47)$$

Post-scaling:

Zur Leistungsanpassung der gemäß Gleichung (47) erzeugten Lautsprechersignale $\hat{X}_{FL}(n,k)$, $\hat{X}_{FR}(n,k)$ und $\hat{X}_C(n,k)$ wird vor allem zur Reduktion der Ambience-Anteile in den vorderen Kanälen und Anpassung der Wellenform ein Post-scaling durchgeführt. Dadurch soll eine Dominanz der Ambience-Anteile über die gepannten Direktsignale und falsch entstehende Phantomschallquellen verhindert werden. Die skalierten Signale $\hat{X}'_{FL}(n,k)$, $\hat{X}'_{FR}(n,k)$ und $\hat{X}'_C(n,k)$ ergeben sich zu

$$\begin{bmatrix} \hat{X}'_{FL}(n,k) \\ \hat{X}'_C(n,k) \\ \hat{X}'_{FR}(n,k) \end{bmatrix} = \begin{bmatrix} \dfrac{\sqrt{P_{X_{FL}}(n,k)}}{\sqrt{P_{\hat{X}_{FL}}(n,k)}} & 0 & 0 \\ 0 & \dfrac{\sqrt{P_{X_C}(n,k)}}{\sqrt{P_{\hat{X}_C}(n,k)}} & 0 \\ 0 & 0 & \dfrac{\sqrt{P_{X_{FR}}(n,k)}}{\sqrt{P_{\hat{X}_{FR}}(n,k)}} \end{bmatrix} \cdot \begin{bmatrix} \hat{X}_{FL}(n,k) \\ \hat{X}_C(n,k) \\ \hat{X}_{FR}(n,k) \end{bmatrix} \qquad (48)$$

Dabei sind die Leistungen $P_{\hat{X}_{FL}}(n,k)$, $P_{\hat{X}_{FR}}(n,k)$ und $P_{\hat{X}_C}(n,k)$ die Leistungen der geschätzten Lautsprechersignale gemäß der Bestimmungsgleichung (47) und die Leistungen $P_{X_{FL}}(n,k)$, $P_{X_{FR}}(n,k)$ und $P_{X_C}(n,k)$ die tatsächlichen Leistungen der einzelnen Kanäle. Die erzeugten Signale sollen somit auf die Leistungen der tatsächlichen Signale skaliert werden. Durch zweckmäßige Betrachtung der jeweiligen Signale mit dem Ausdruck der Leistungen über Erwartungswerte und dem Nutzen der Signalmodelle und Bestimmungsgleichungen, lassen sich geschickt Ausdrücke für die Skalierungsfaktoren finden.

Um die Faktoren für die Skalierung bestimmen zu können, hat sich die Umformulierung der Gleichung (6) als zweckmäßig erwiesen. Es gilt:

$$\begin{bmatrix} \hat{S}(n,k) \\ \hat{N}_L(n,k) \\ \hat{N}_R(n,k) \end{bmatrix} = \begin{bmatrix} w_1(n,k) & w_2(n,k) \\ w_3(n,k) & w_4(n,k) \\ w_5(n,k) & w_6(n,k) \end{bmatrix} \cdot \begin{bmatrix} X_L(n,k) \\ X_R(n,k) \end{bmatrix} . \qquad (49)$$

Die Einträge der Extraktionsmatrix $\underline{A}^+(n,k)$ werden nun entsprechend über die Koeffizienten $w_1(n,k)$ bis $w_6(n,k)$ ausgedrückt. Die geschätzte Leistung des linken vorderen Kanals $P_{\hat{X}_{FL}}(n,k)$ ergibt sich aus dem Erwartungswert zweiter Ordnung des linken vorderen Lautsprechersignals $\hat{X}_{FL}(n,k)$, welches durch die Bestimmungsgleichung (47) ersetzt wird:

$$P_{\hat{X}_{FL}}(n,k) = E\{\hat{X}_{FL}^2(n,k)\}$$

$$= E\left\{\left(g_1(n,k) \cdot \hat{S}(n,k)\right)^2\right\} + E\{\hat{N}_L^2(n,k)\} + E\{2g_1(n,k) \cdot \hat{S}(n,k) \cdot \hat{N}_L(n,k)\} . \qquad (50)$$

Die drei Erwartungswerte zweiter Ordnung sollen der Übersichtlichkeit halber einzeln angegeben werden. Dazu werden die Bestimmungsgleichungen für $\hat{S}(n,k)$, $\hat{N}_L(n,k)$ und $\hat{N}_R(n,k)$ gemäß der Gleichung (49) eingesetzt und die Eingangssignale durch das Signalmodell gemäß Gleichung (4) ersetzt. Es gilt:

$$E\left\{\left(g_1(n,k) \cdot \hat{S}(n,k)\right)^2\right\} = g_1^2(n,k) \cdot P_{\hat{S}}(n,k)$$

$$= g_1^2(n,k) \cdot E\left\{\left(w_1(n,k) \cdot X_L(n,k) + w_2(n,k) \cdot X_R(n,k)\right)^2\right\} \qquad (51)$$

$$= g_1^2(n,k) \cdot \left[P_S(n,k) \cdot \left(w_1(n,k) \cdot a_L(n,k) + w_2(n,k) \cdot a_R(n,k)\right)^2 + P_N(n,k)\right.$$

$$\left. \cdot \left(w_1^2(n,k) + w_2^2(n,k)\right)\right] .$$

Der Ausdruck für $E\{\hat{N}_L^2(n,k)\}$ lässt sich sofort aus der Gleichung (51) ableiten, da sich die Bestimmungsgleichungen von $\hat{S}(n,k)$ und $\hat{N}_L(n,k)$ nur durch die Koeffizienten unterscheiden ($w_3(n,k)$ und $w_4(n,k)$ anstatt $w_1(n,k)$ und $w_2(n,k)$), lediglich der Faktor $g_1^2(n,k)$ entfällt. Es gilt:

$$E\{\hat{N}_L^2(n,k)\} = P_S(n,k) \cdot \left(w_3(n,k) \cdot a_L(n,k) + w_4(n,k) \cdot a_R(n,k)\right)^2 + P_N(n,k)$$

$$\cdot \left(w_3^2(n,k) + w_4^2(n,k)\right) . \qquad (52)$$

Der Ausdruck $E\{2g_1(n,k) \cdot \hat{S}(n,k) \cdot \hat{N}_L(n,k)\}$ ergibt sich zu

$$E\left\{2g_1(n,k)\cdot \hat{S}(n,k)\cdot \hat{N}_L(n,k)\right\}$$

$$= 2g_1$$
$$\cdot \left(w_1(n,k)\cdot w_3(n,k)\cdot \left(a_L^2(n,k)\cdot P_S(n,k) + P_N(n,k)\right)\right.$$
$$+ w_2(n,k)\cdot w_4(n,k)$$
$$\cdot \left(a_R^2(n,k)\cdot P_S(n,k) + P_N(n,k)\right) + w_1(n,k)\cdot w_4(n,k)\cdot a_L(n,k)$$
$$\cdot a_R(n,k)\cdot P_S(n,k) + w_2(n,k)\cdot w_3(n,k)\cdot a_L(n,k)$$
$$\left. \cdot a_R(n,k)\cdot P_S(n,k)\right) \ . \tag{53}$$

Die geschätzte Leistung des rechten vorderen Kanals $P_{\hat{X}_{FR}}(n,k)$ ergibt sich aus dem Erwartungswert zweiter Ordnung des rechten vorderen Lautsprechersignals $\hat{X}_{FR}(n,k)$, welches durch die Bestimmungsgleichung (47) ersetzt wird:

$$P_{\hat{X}_{FR}}(n,k) = E\left\{\hat{X}_{FR}^2(n,k)\right\}$$

$$= E\left\{\left(g_3(n,k)\cdot \hat{S}(n,k)\right)^2\right\} + E\left\{\hat{N}_R^2(n,k)\right\} + E\left\{2g_3(n,k)\cdot \hat{S}(n,k)\cdot \hat{N}_R(n,k)\right\} \ . \tag{54}$$

Die drei Erwartungswerte zweiter Ordnung sollen der Übersichtlichkeit halber einzeln angegeben werden und lassen sich direkt aus den Gleichungen (51) bis (53) ableiten, da sich lediglich die Koeffizienten in den Bestimmungsgleichungen unterscheiden. Es gilt

$$E\left\{\left(g_3(n,k)\cdot \hat{S}(n,k)\right)^2\right\}$$

$$= g_3^2(n,k)$$
$$\cdot \left[P_S(n,k)\cdot \left(w_1(n,k)\cdot a_L(n,k) + w_2(n,k)\cdot a_R(n,k)\right)^2 + P_N(n,k)\right.$$
$$\left. \cdot \left(w_1^2(n,k) + w_2^2(n,k)\right)\right] \ , \tag{55}$$

$$E\left\{\hat{N}_R^2(n,k)\right\} = P_S(n,k)\cdot \left(w_5(n,k)\cdot a_L(n,k) + w_6(n,k)\cdot a_R(n,k)\right)^2 + P_N(n,k)$$
$$\cdot \left(w_5^2(n,k) + w_6^2(n,k)\right) \ , \tag{56}$$

$$E\{2g_3(n,k) \cdot \hat{S}(n,k) \cdot \bar{N}_R(n,k)\}$$
$$= 2g_3(n,k)$$
$$\cdot \left(w_1(n,k) \cdot w_5(n,k) \cdot \left(a_L^2(n,k) \cdot P_S(n,k) + P_N(n,k)\right)\right.$$
$$+ w_2(n,k) \cdot w_6(n,k)$$
$$\cdot \left(a_R^2(n,k) \cdot P_S(n,k) + P_N(n,k)\right) + w_1(n,k) \cdot w_6(n,k)$$
$$\cdot a_L(n,k) \cdot a_R(n,k) \cdot P_S(n,k) + w_2(n,k) \cdot w_5(n,k)$$
$$\left. \cdot a_L(n,k) \cdot a_R(n,k) \cdot P_S(n,k)\right).$$

$$(57)$$

Die geschätzte Leistung des Center-Kanals $P_{\hat{C}}(n,k)$ ergibt sich aus dem Erwartungswert zweiter Ordnung des Center-Lautsprechersignals $\hat{X}_C(n,k)$, welches durch die Bestimmungsgleichung (47) ersetzt wird. Der Ausdruck $E\{(g_2(n,k)\cdot\hat{S}(n,k))^2\}$ lässt sich sofort aus der Gleichung (51) oder (55) ableiten, da lediglich der paarweise Panning-Koeffizient verschieden ist. Es gilt:

$$P_{\hat{X}_C}(n,k) = E\{\hat{X}_C^2(n,k)\}$$

$$= g_2^2(n,k) \cdot \left[P_S(n,k) \cdot \left(w_1(n,k) \cdot a_L(n,k) + w_2(n,k) \cdot a_R(n,k)\right)^2 + P_N(n,k)\right.$$
$$\left. \cdot \left(w_1^2(n,k) + w_2^2(n,k)\right)\right].$$

$$(58)$$

Die tatsächlichen Leistungen der Lautsprechersignale $P_{X_{FL}}(n,k)$, $P_{X_{FR}}(n,k)$ und $P_{X_C}(n,k)$ ergeben sich aus den Erwartungswerten zweiter Ordnung der tatsächlichen Lautsprechersignale in Anlehnung an die Gleichung (47). Die tatsächlichen Signale ergeben sich zu

$$\begin{bmatrix} X_{FL}(n,k) \\ X_C(n,k) \\ X_{FR}(n,k) \end{bmatrix} = \begin{bmatrix} g_1(n,k) & 1 & 0 \\ g_2(n,k) & 0 & 0 \\ g_3(n,k) & 0 & 1 \end{bmatrix} \cdot \begin{bmatrix} S(n,k) \\ N_L(n,k) \\ N_R(n,k) \end{bmatrix}.$$

$$(59)$$

Die Leistungen $P_{X_{FL}}(n,k)$, $P_{X_{FR}}(n,k)$ und $P_{X_C}(n,k)$ bestimmen sich demnach zu

$$P_{X_{FL}}(n,k) = E\left\{\left(g_1(n,k) \cdot S(n,k) + N_L(n,k)\right)^2\right\}$$

$$= g_1^2(n,k) \cdot P_S(n,k) + P_N(n,k),$$

$$(60)$$

$$P_{X_{FR}}(n,k) = E\left\{\left(g_3(n,k) \cdot S(n,k) + N_R(n,k)\right)^2\right\}$$

$$= g_3^2(n,k) \cdot P_S(n,k) + P_N(n,k),$$

$$(61)$$

und

$$P_{X_C} = E\left\{\left(g_2(n,k) \cdot S(n,k)\right)^2\right\}$$

$$= g_2^2(n,k) \cdot P_S(n,k) \ . \tag{62}$$

Um die Gleichungen (50) bis (62) vollständig bestimmen zu können, muss weiterhin die Leistung des Direktsignals $P_S(n,k)$ sowie die Leistung der Ambience-Signale $P_N(n,k)$ ermittelt werden. Mit $P_{N_L}(n,k)$ als Leistung des linken Ambience-Signals und $P_{N_R}(n,k)$ als Leistung des rechten Ambience-Signals gilt unter der Annahme, dass die Leistungen der beiden Ambience-Signale gleich sind

$$P_{N_L}(n,k) = P_{N_R}(n,k) = P_N(n,k) \ , \tag{63}$$

Die Leistungen $P_S(n,k)$ und $P_N(n,k)$ lassen wiederum aus einer geschickten Leistungsbetrachtung der Eingangssignale ermitteln. So ist es möglich, diese aus den Eigenwerten $\lambda_1(n,k)$ und $\lambda_2(n,k)$ der Kovarianzmatrix $\underline{R}(n,k)$ abzuleiten. Die Kovarianzmatrix $\underline{R}(n,k)$ besteht aus den beiden Autokorrelationen ($r_{LL}(n,k)$ und $r_{RR}(n,k)$) sowie der Kreuzkorrelation ($r_{LR}(n,k) = r_{RL}(n,k)$) der Eingangssignale und setzt sich wie folgt zusammen:

$$\underline{R}(n,k) = \begin{bmatrix} r_{LL}(n,k) & r_{LR}(n,k) \\ r_{RL}(n,k) & r_{RR}(n,k) \end{bmatrix} \tag{64}$$

Für die Eigenwerte gilt

$$\lambda_{1,2}(n,k) = \frac{1}{2}\Bigg( r_{LL}(n,k) + r_{RR}(n,k)$$

$$\pm \sqrt{\left(r_{LL}(n,k) - r_{RR}(n,k)\right)^2 + 4 \cdot r_{LR}(n,k) \cdot r_{RL}(n,k)} \Bigg) \ . \tag{65}$$

Ersetzt man geschickter Weise wiederum die Korrelationen durch Erwartungswerte und drückt die Eingangssignale über das Signalmodell aus, wie dies in den Gleichungen (10) bis (12) der Fall ist, so lässt sich zeigen, dass der Eigenwert $\lambda_2(n,k)$ direkt der Leistung der Ambience-Signale $P_N(n,k)$ entspricht. Der Eigenwert $\lambda_1(n,k)$ entspricht der Summe aus der Leistung des Direktsignals $P_S(n,k)$ und der Leistung der Ambience-Signale $P_N(n,k)$. Die Leistung des Direktsignals ergibt sich somit zu:

$$P_S(n,k) = \lambda_1(n,k) - \lambda_2(n,k)$$

$$= \sqrt{\left(r_{LL}(n,k) - r_{RR}(n,k)\right)^2 + 4 \cdot r_{LR}(n,k) \cdot r_{RL}(n,k)} \ , \tag{66}$$

die Leistung der Ambience-Signale zu:

$$P_N(n,k) = \lambda_2(n,k) \tag{67}$$

$$= \frac{1}{2}\Bigg( r_{LL}(n,k) + r_{RR}(n,k)$$

$$- \sqrt{\left(r_{LL}(n,k) - r_{RR}(n,k)\right)^2 + 4 \cdot r_{LR}(n,k) \cdot r_{RL}(n,k)} \Bigg) \ .$$

Die Leistung der Ambience-Signale und die Leistung des Direktsignals ergeben sich somit aus der geschickten Leistungsbetrachtung der Eingangssignale.

Nachverarbeitung der Ambience-Signale:

Bei der Wiedergabe von nicht dekorrelierten Ambience-Signalen über die Surround-Lautsprecher kann es aufgrund entstehender seitlicher Phantomschallquellen zu einer Aufweitung des Stereo-Panoramas über die beiden äußeren vorderen Lautsprecher hinaus kommen. Dies trägt allerdings wesentlich zur Verbesserung des räumlichen Hörerlebnisses bei. Um diesen Effekt sowie die Dominanz der Ambience-Signale zu reduzieren, können die Surround-Kanäle daher allgemein um 2 *dB* abgesenkt werden.

Die extrahierten Ambience-Signale enthalten noch einen gewissen Anteil an Direktsignal. Dadurch kann es ebenfalls zu einer Aufweitung des Stereo-Panoramas kommen. Um den noch in den Ambience-Signalen enthaltenen Direktanteil $S_A(n,k)$ zu reduzieren, werden die Ambience-Signale dem Decoder als Eingangsignale zugeführt. Es ergibt sich demnach folgendes modifiziertes Signalmodell:

$$\bar{N}_L(n,k) = a_{L_A}(n,k) \cdot S_A(n,k) + N_{N_L}(n,k)$$

$$\bar{N}_R(n,k) = a_{R_A}(n,k) \cdot S_A(n,k) + N_{N_R}(n,k) \ . \tag{68}$$

Jedes Ambience-Signal besteht demnach weiterhin aus einem Ambience-Anteil und einem mit dem jeweiligen Panning-Koeffizienten versehenen Direktanteil. Die Extraktion des in den Ambience-Signalen enthaltenen Direktanteils $\hat{S}_A(n,k)$ folgt aus den Gleichungen (6) und (7). Es gilt mit dem variablen Parameter $r_A$.

$$\hat{S}_A(n,k) = \frac{1}{a_{L_A}^2(n,k) + a_{R_A}^2(n,k) + r_A} \cdot [a_{L_A}(n,k) \quad a_{R_A}(n,k)] \cdot \begin{bmatrix} \bar{N}_L(n,k) \\ \bar{N}_R(n,k) \end{bmatrix} \ . \tag{69}$$

Die Panning-Koeffizienten, welche neu berechnet werden müssen, ergeben sich gemäß den Gleichungen (22) und (23) zu

$$a_{L_A}(n,k) = \sqrt{\frac{1}{2} - \frac{1}{4} \cdot \Delta\psi_A(n,k) \cdot \psi_A(n,k)} \tag{70}$$

und

$$a_{R_A}(n,k) = \sqrt{1 - a_{L_A}^2(n,k)} \ . \tag{71}$$

Dabei ist es selbstverständlich notwendig, alle Leistungsbetrachtungen auf die Ambience-Signale zu beziehen. Mit $r_{LL_A}(n,k)$ und $r_{RR_A}(n,k)$ als Autokorrelationen des linken und rechten Ambience-Signals, sowie der Kreuzkorrelation $r_{LR_A}(n,k)$ zwischen den beiden Ambience-Signalen gilt

$$\psi_A(n,k) = 2 \cdot \frac{r_{LR_A}(n,k)}{r_{LL_A}(n,k) + r_{RR_A}(n,k)} \tag{72}$$

und

$$\Delta \psi_A = \begin{cases} \dfrac{r_{LR_A}(n,k)}{r_{LL_A}(n,k)} - \dfrac{r_{LL_A}(n,k)}{r_{LR_A}(n,k)}, & r_{LL_A}(n,k) \geqq r_{RR_A}(n,k) \\[2em] \dfrac{r_{RR_A}(n,k)}{r_{LR_A}(n,k)} - \dfrac{r_{LR_A}(n,k)}{r_{RR_A}(n,k)}, & r_{LL_A}(n,k) < r_{RR_A}(n,k) \end{cases} \tag{73}$$

Mit dem ermittelten, in den Ambience-Signalen enthaltenen, Direktanteil $\hat{S}_A(n,k)$, können nun die reduzierten Ambience-Signale $\hat{N}_{LA}(n,k)$ und $\hat{N}_{RA}(n,k)$ zu

$$\hat{N}_{L_A}(n,k) = \hat{N}_L(n,k) - \hat{S}_A(n,k) \tag{74}$$

und

$$\hat{N}_{R_A}(n,k) = \hat{N}_R(n,k) - \hat{S}_A(n,k) \tag{75}$$

bestimmt werden. Dieser Vorgang kann beliebig oft iterativ angewendet werden, um den jeweils gewünschten Effekt zu erzielen. Mit jedem Iterationsschritt verringert sich der in den Ambience-Signalen enthaltene Direktanteil.

Ebenfalls ist gemäß den Gleichungen (6), (7) und (68) eine Extraktion der Signalkomponenten $N_{N_L}(n,k)$ und $N_{N_R}(n,k)$ möglich, welche als Signale für zwei zusätzliche Lautsprecher verwendet werden können (zum Beispiel Left Rear Surround und Right Rear Surround einer 7.1 Mehrkanalkonfiguration).

Erzeugung des Subwoofer-Kanals:

Ein explizites Signal für den Subwoofer eines Mehrkanal-Lautsprechersystems ist dann notwendig, wenn verhindert werden soll, dass das System selbst ein solches Signal aus allen zur Verfügung stehenden Kanälen erzeugt. Manche Systeme erzeugen zum Beispiel entweder gar kein oder in einer bestimmten Konfiguration (angeschlossenes Subwoofer-Kabel) kein Subwoofer-Signal und sind somit auf ein explizites Signal angewiesen.

Das Subwoofer-Signal $X_{LFE}(n,k)$ folgt aus der Tiefpassfilterung der beiden Eingangssignale $X_L(n,k)$ und $X_R(n,k)$. Diese werden dazu zunächst addiert sowie leistungsangepasst und anschließend mit der Übertragungsfunktion des Tiefpasses $H_{TP}(k)$ multipliziert. Es gilt:

$$X_{LFE}(n,k) = \sqrt{0.5} \cdot \left( X_L(n,k) + X_R(n,k) \right) \cdot H_{TP}(k). \tag{76}$$

Mit der Verwendung des Tiefpasses soll die Bandbreite des Subwoofer-Kanals reduziert werden. Dazu wird die Durchlassfrequenz $f_D$ zum Beispiel zu $f_D$ = 120 *Hz* und die Sperrfrequenz $f_S$ zum Beispiel zu $f_S$ = 160 *Hz* gewählt.

Leistungsnormierung:

Um zu gewährleisten, dass die Summe der Leistungen aller extrahierten Kanäle gleich der Summe der Leistungen der Eingangssignale entspricht, ist eine optionale Leistungsnormierung nötig. Dabei werden alle Lautsprechersignale gleichermaßen mit dem Faktor $q(n,k)$ skaliert. Dieser ergibt sich aus den Leistungen der Eingangs-und Ausgangssignale zu

$$q(n,k)$$

$$= \frac{\sqrt{P_{X_L}(n,k) + P_{X_R}(n,k)}}{\sqrt{P_{X_{FL}}(n,k) + P_{X_C}(n,k) + P_{X_{FR}}(n,k) + P_{X_{SL}}(n,k) + P_{X_{SR}}(n,k) + P_{X_{LFE}}(n,k)}} . \quad (77)$$

Die normierten Lautspechersignale ergeben sich demnach zu

$$X_{FL}(n,k) = q(n,k) \cdot X_{FL}(n,k)$$

$$X_C(n,k) = q(n,k) \cdot X_C(n,k)$$

$$X_{FR}(n,k) = q(n,k) \cdot X_{FR}(n,k)$$

$$X_{SL}(n,k) = q(n,k) \cdot X_{SL}(n,k) \quad (78)$$

$$X_{SR}(n,k) = q(n,k) \cdot X_{SR}(n,k)$$

$$X_{LFE}(n,k) = q(n,k) \cdot X_{LFE}(n,k) .$$

Nachdem alle Signale erzeugt wurden, werden diese aus dem Frequenzbereich in den Zeitbereich transformiert.

**Patentansprüche**

1. Verfahren zum Erzeugen eines Mehrkanalaudiosignals (600, 700) aus einem Stereoaudiosignal (100, 200), wobei das Stereoaudiosignal

   - ein erstes Audiosignal (110) für eine linke Wiedergabeeinrichtung (810) und
   - ein zweites Audiosignal (120) für eine rechte Wiedergabeeinrichtung (820) aufweist;

   das Verfahren aufweisend die folgenden Schritte:

   Ermitteln einer ersten Leistung des ersten Audiosignals (110) und einer zweiten Leistung des zweiten Audiosignals (120);
   Bestimmen der Autokorrelation des ersten Audiosignals und des zweiten Audiosignals sowie der Kreuzkorrelation des ersten Audiosignals und des zweiten Audiosignals;
   Ermitteln einer Ähnlichkeitsfunktion aus dem Verhältnis des Erwartungswertes der Kreuzkorrelation und des Erwartungswertes der Summe der Autokorrelationen des ersten und zweiten Audiosignals;
   Ermitteln einer ersten partiellen Ähnlichkeitsfunktion als Verhältnis der Kreuzkorrelation des ersten und zweiten Audiosignals und der Autokorrelation des ersten Audiosignals;
   Ermitteln einer zweiten partiellen Ähnlichkeitsfunktion als Verhältnis der Kreuzkorrelation des ersten und zweiten Audiosignals und der Autokorrelation des zweiten Audiosignals;
   Ermitteln eines ersten Panning-Koeffizienten (310) und eines zweiten Panning-Koeffizienten (320) des Stereoaudiosignals, wobei der erste Panning-Koeffizient basierend auf der ersten und zweiten partiellen Ähnlichkeitsfunktion sowie der Ähnlichkeitsfunktion des ersten und zweiten Audiosignals und der zweite Panning-Koeffizient basierend auf dem ersten Panning-Koeffizienten ermittelt wird;
   wobei der erste Panning-Koeffizient (310) und der zweite Panning-Koeffizient (320) ausgeführt sind, eine Phantomschallquelle (811, 812) in einem Hörbereich (890) zwischen der linken Wiedergabeeinrichtung (810) und der rechten Wiedergabeeinrichtung (820) zu positionieren;
   Ermitteln eines Direktsignals (515) und eines ersten Umgebungssignals (510) und eines zweiten Umgebungssignals (520) aus dem ersten Audiosignal und dem zweiten Audiosignal sowie dem ersten Panning-Koeffizienten (310) und dem zweiten Panning-Koeffizienten (320), wobei ein Umgebungssignal einem Nachhall und Reflexionen des Direktsignals in einem Raum entspricht;

wobei ein vierter Panning-Koeffizient (360) und ein fünfter Panning-Koeffizient (370) aus dem ersten Umgebungssignal (510) und aus dem zweiten Umgebungssignal (520) ermittelt werden;

wobei der vierte Panning-Koeffizient (360) und der fünfte Panning-Koeffizient (370) ausgeführt sind, in dem ersten Umgebungssignal (510) und in dem zweiten Umgebungssignal (520) enthaltene Bestandteile des Direktsignals (565) zu ermitteln;

wobei jeweils das erste Umgebungssignal (510) und das zweite Umgebungssignal (520) um die in ihnen enthaltenen Bestandteile des Direktsignals (565) reduziert werden;

wobei das reduzierte erste Umgebungssignal (630) einem hinteren linken Tonkanal (730) zugeordnet wird;

wobei das reduzierte zweite Umgebungssignal (640) einem hinteren rechten Tonkanal (740) zugeordnet wird;

Ermitteln einer Mehrzahl von Repanning-Koeffizienten (410, 415, 420) aus dem ersten und zweiten Panning-Koeffizienten (310, 320), wobei jeder Repanning-Koeffizient der Mehrzahl von Repanning-Koeffizienten (410, 415, 420) einem Tonkanal (580, 585, 590) einer Mehrzahl von Tonkanälen des Mehrkanalaudiosignals (600, 700) zugeordnet wird;

wobei die Repanning-Koeffizienten (410, 415, 420) für die Mehrzahl von Tonkanälen (580, 585, 590) ausgeführt sind, eine Phantomschallquelle (811, 812) in einem Hörbereich (890) zwischen einer Mehrzahl von Wiedergabeeinrichtungen (810, 815, 820, 830, 840) für das Mehrkanalaudiosignal (600, 700) zu positionieren, wobei von der Mehrzahl von Wiedergabeeinrichtungen (810, 815, 820, 830, 840) für das Mehrkanalaudiosignal jeweils eine Wiedergabeeinrichtung einem Tonkanal der Mehrzahl von Tonkanälen zugeordnet wird;

Verrechnen des Direktsignals (515) mit jeweils jedem der Repanning-Koeffizienten (410, 415, 420) der Mehrzahl von Repanning-Koeffizienten, wobei

- das mit einem ersten Repanning-Koeffizienten (410) verrechnete Direktsignal (515) sowie das additiv hinzugefügte erste Umgebungssignal (510) einem ersten Tonkanal (580) zugeordnet wird,
- das mit einem zweiten Repanning-Koeffizienten (415) verrechnete Direktsignal (515) einem zweiten Tonkanal (585) zugeordnet wird, und
- das mit einem dritten Repanning-Koeffizienten (420) verrechnete Direktsignal (515) sowie das additiv hinzugefügte zweite Umgebungssignal (520) einem dritten Tonkanal (590) zugeordnet wird;

Überführen jedes Tonkanals (580, 585, 590) in jeweils ein Wiedergabesignal (600, 700) des Mehrkanalaudiosignals, wobei jedes Wiedergabesignal für jeweils eine Wiedergabeeinrichtung vorgesehen ist.

2. Verfahren nach Anspruch 1,
   weiterhin aufweisend den Schritt:

   Ausgeben jedes Tonkanals (580, 585, 590) an jeweils eine Wiedergabeeinrichtung (810, 815, 820, 830, 840).

3. Verfahren nach einem der Ansprüche 1 oder 2,
   weiterhin aufweisend den Schritt:

   Ausgeben jedes Tonkanals (580, 585, 590) an eine Aufzeichnungseinheit.

4. Verfahren nach einem der vorhergehenden Ansprüche,
   wobei vor dem Ausgeben jedes Tonkanals (580, 585, 590) auf jeweils eine Wiedergabeeinrichtung (810, 815, 820, 830, 840) eine Leistungsanpassung des Tonkanals so erfolgt, dass jeweils die Leistung des Umgebungssignals (510, 520) in Bezug zu dem verrechneten Direktsignal (515) reduziert wird.

5. Verfahren nach einem der vorhergehenden Ansprüche,
   wobei die Summe des ersten Audiosignals (110) und des zweiten Audiosignals (120) tiefpassgefiltert wird und einen Niederfrequenztonkanal (760) darstellt, wobei der Niederfrequenztonkanal (760) als einer der Tonkanäle des Mehrkanalaudiosignals ausgeführt ist.

6. Verfahren nach einem der vorhergehenden Ansprüche,
   wobei der vierte Panning-Koeffizient (360) und der fünfte Panning-Koeffizient (370) ausgeführt sind, in dem ersten Umgebungssignal (510) und in dem zweiten Umgebungssignal (520) enthaltene Bestandteile eines sechsten Umgebungssignals (560) und eines siebten Umgebungssignals (570) zu ermitteln;
   wobei das sechste Umgebungssignal und das siebte Umgebungssignal jeweils einem weiteren Tonkanal des Mehrkanalaudiosignals zugeordnet werden.

7. Verfahren nach einem der vorhergehenden Ansprüche,
wobei aus dem reduzierten ersten Umgebungssignal (630) und aus dem reduzierten zweiten Umgebungssignal (640) iterativ der vierte Panning-Koeffizient (360) und der fünfte Panning-Koeffizient (370) ermittelt werden;
wobei vor jeder Iteration der Ermittlung des vierten Panning-Koeffizienten (360) und des fünften Panning-Koeffizienten (370) das erste Umgebungssignal (510) und das zweite Umgebungssignal (520) um die in ihnen enthaltenen Bestandteile des Direktsignals (565) reduziert werden.

8. Verfahren nach einem der vorhergehenden Ansprüche,
wobei der erste Panning-Koeffizient (310) und der zweite Panning-Koeffizient (320) des ersten Audiosignals (110) und des zweiten Audiosignals (120) für eine Vielzahl von Frequenzen des Stereoaudiosignals (100, 200) berechnet werden.

9. Verfahren nach einem der vorhergehenden Ansprüche,
wobei der erste Panning-Koeffizient (310) und der zweite Panning-Koeffizient (320) des ersten Audiosignals (110) und des zweiten Audiosignals (120) jeweils nach einer definierten Zeitspanne wiederkehrend erneut ermittelt werden.

10. Verfahren zum Erzeugen eines Mehrkanalaudiosignals (600, 700) aus einem Stereoaudiosignal (100, 200),
das Verfahren aufweisend die Schritte:

Transformieren eines ersten Audiosignals (110) und eines zweiten Audiosignals (120) des Stereoaudiosignals aus dem Zeitbereich in den Frequenzbereich;
Durchführen des Verfahrens nach Anspruch 1 im Frequenzbereich;
Transformieren der Wiedergabesignale aus dem Frequenzbereich in den Zeitbereich.

11. Audiosignalverarbeitungsvorrichtung zum Erzeugen eines Mehrkanalaudiosignals (600, 700) aus einem Stereoaudiosignal (100) mit einem ersten Audiosignal (110) und einem zweiten Audiosignal (120),
die Audiosignalverarbeitungsvorrichtung aufweisend:

eine Panning-Koeffizientenberechnungseinheit (20), welche ausgeführt ist:

einen ersten Panning-Koeffizienten (310) und einen zweiten Panning-Koeffizienten (320) aus dem Stereoaudiosignals (100) zu ermitteln,
eine erste Leistung des ersten Audiosignals (110) und eine zweite Leistung des zweiten Audiosignals (120) zu ermitteln,
die Autokorrelation des ersten Audiosignals und des zweiten Audiosignals sowie die Kreuzkorrelation des ersten Audiosignals und des zweiten Audiosignals zu bestimmen,
eine Ähnlichkeitsfunktion aus dem Verhältnis des Erwartungswertes der Kreuzkorrelation und des Erwartungswertes der Summe der Autokorrelationen des ersten und zweiten Audiosignals zu bestimmen,
eine erste partielle Ähnlichkeitsfunktion als Verhältnis der Kreuzkorrelation des ersten und zweiten Audiosignals und der Autokorrelation des ersten Audiosignals zu ermitteln,
eine zweite partielle Ähnlichkeitsfunktion als Verhältnis der Kreuzkorrelation des ersten und zweiten Audiosignals und der Autokorrelation des zweiten Audiosignals zu ermitteln;

wobei der erste Panning-Koeffizient basierend auf der ersten und zweiten partiellen Ähnlichkeitsfunktion sowie der Ähnlichkeitsfunktion des ersten und zweiten Audiosignals und der zweite Panning-Koeffizient basierend auf dem ersten Panning-Koeffizienten ermittelt wird;
wobei der erste Panning-Koeffizient (310) und der zweite Panning-Koeffizient (320) ausgeführt sind, eine Phantomschallquelle (811, 812) in einem Hörbereich (890) zwischen einer linken Wiedergabeeinrichtung (810) und einer rechten Wiedergabeeinrichtung (820) zu positionieren;
eine Signalextraktionseinheit (40), welche ausgeführt ist, ein Direktsignal (515) und ein erstes Umgebungssignal (510) und ein zweites Umgebungssignal (520) aus dem ersten Audiosignal und dem zweiten Audiosignal sowie dem ersten Panning-Koeffizienten und dem zweiten Panning-Koeffizienten zu ermitteln, wobei ein Umgebungssignal einem Nachhall und Reflexionen des Direktsignals in einem Raum entspricht;
wobei die Audiosignalverarbeitungsvorrichtung ausgeführt ist, einen vierten Panning-Koeffizient (360) und einen fünften Panning-Koeffizient (370) aus dem ersten Umgebungssignal (510) und aus dem zweiten Umgebungssignal (520) zu ermitteln;

wobei der vierte Panning-Koeffizient (360) und der fünfte Panning-Koeffizient (370) ausgeführt sind, in dem ersten Umgebungssignal (510) und in dem zweiten Umgebungssignal (520) enthaltene Bestandteile des Direktsignals (565) zu ermitteln; wobei die Audiosignalverarbeitungsvorrichtung ausgeführt ist jeweils das erste Umgebungssignal (510) und das zweite Umgebungssignal (520) um die in ihnen enthaltenen Bestandteile des Direktsignals (565) zu reduzieren;

wobei die Audiosignalverarbeitungsvorrichtung ausgeführt ist das reduzierte erste Umgebungssignal (630) einem hinteren linken Tonkanal (730) zuzuordnen;

wobei die Audiosignalverarbeitungsvorrichtung ausgeführt ist das reduzierte zweite Umgebungssignal (640) einem hinteren rechten Tonkanal (740) zuzuordnen;

eine Repanning-Koeffizientenberechnungseinheit (30), welche ausgeführt ist, eine Mehrzahl von Repanning-Koeffizienten (410, 415, 420) aus dem ersten und zweiten Panning-Koeffizienten zu ermitteln, wobei jeder Repanning-Koeffizient der Mehrzahl von Repanning-Koeffizienten ausgeführt ist, einem Tonkanal (580, 585, 590) einer Mehrzahl von Tonkanälen des Mehrkanalaudiosignals zugeordnet zu werden;

wobei die Repanning-Koeffizienten für die Mehrzahl von Tonkanälen ausgeführt sind, eine Phantomschallquelle (811, 812) in einem Hörbereich (890) zwischen einer Mehrzahl von Wiedergabeeinrichtungen (810, 815, 820, 830, 840) für das Mehrkanalaudiosignal zu positionieren, wobei von der Mehrzahl von Wiedergabeeinrichtungen für das Mehrkanalaudiosignal jeweils eine Wiedergabeeinrichtung einem Tonkanal der Mehrzahl von Tonkanälen zuordenbar ist;

eine Verrechnungseinheit (42) welche ausgeführt ist, das Direktsignal mit jeweils jedem der Repanning-Koeffizienten der Mehrzahl von Repanning-Koeffizienten zu verrechnen, wobei

- das mit einem ersten Repanning-Koeffizienten (410) verrechnete Direktsignal (515) sowie das additiv hinzugefügte erste Umgebungssignal (510) einem ersten Tonkanal (580) zuordenbar ist,
- das mit einem zweiten Repanning-Koeffizienten (415) verrechnete Direktsignal (515) einem zweiten Tonkanal (585) zuordenbar ist, und
- das mit einem dritten Repanning-Koeffizienten (420) verrechnete Direktsignal (515) sowie das additiv hinzugefügte zweite Umgebungssignal (520) einem dritten Tonkanal (590) zuordenbar ist.

**12.** Audiosignalverarbeitungsvorrichtung nach Anspruch 11, weiterhin aufweisend:

eine Stereoaudiosignaltransformationseinheit (10), welche ausgeführt ist, das Stereoaudiosignal aus dem Zeitbereich in den Frequenzbereich zu transformieren;

eine Skalierungseinheit (50), welche ausgeführt ist, eine Leistungsanpassung jedes Tonkanals der Mehrzahl von Tonkanälen vorzunehmen;

eine Mehrkanalaudiosignaltransformationseinheit (80), welche ausgeführt ist, die von der Skalierungseinheit leistungsangepassten Tonkanäle aus dem Frequenzbereich in den Zeitbereich zu transformieren.

## Claims

**1.** A method of generating a multi channel audio signal (600, 700) from a stereo audio signal (100, 200), wherein the stereo audio signal comprises:

- a first audio signal (110) for a left reproduction device (810) and
- a second audio signal (120) for a right reproduction device (820), respectively;

the method comprising the following steps:

Determining a first power of the first audio signal (110) and a second power of the second audio signal (120);
Determining the autocorrelation of the first audio signal and of the second audio signal as well as the cross-correlation of the first audio signal and the second audio signal;
Determining a similarity function from the ratio of the expectation value of the cross-correlation and the expected value of the sum of the autocorrelations of the first audio signal and the second audio signal;
Determining a first partial similarity function as the ratio of the cross-correlation of the first audio signal and second audio signal and the autocorrelation of the first audio signal;
Determining a second partial similarity function as the ratio of the cross-correlation of the first audio signal and the second audio signal and the autocorrelation of the second audio signal;

Determining a first panning coefficient (310) and a second panning coefficient (320) of the stereo audio signal, the first panning coefficient based on the first and second partial similarity functions as well as the similarity function of the first audio signal and the second audio signal and the second panning coefficient is determined based on the first panning coefficient;

wherein the first panning coefficient (310) and the second panning coefficient (320) are configured for positioning a phantom sound source (811, 812) in a listening area (890) between the left reproduction device (810) and the right reproduction device (820);

Determining a direct signal (515) and a first ambient signal (510) and a second ambient signal (520) from the first audio signal and the second audio signal and the first panning coefficient (310) and the second panning coefficient (320, wherein an ambient signal corresponds to a reverberation and reflections of the direct signal in a space;

wherein a fourth panning coefficient (360) and a fifth panning coefficient (370) are determined from the first ambient signal (510) and from the second ambient signal (520);

wherein the fourth panning coefficient (360) and the fifth panning coefficient (370) are configured to determine components in the first ambient signal (510) and in the second ambient signal (520) contained in the direct signal (565);

wherein the first ambient signal (510) and the second ambient signal (520) are reduced by the components of the direct signal (565) contained therein;

wherein the reduced first ambient signal (630) is fed to a rear left sound channel (730);

wherein the reduced second ambient signal (640) is fed to a rear right sound channel (740);

Determining a plurality of replication coefficients (410, 415, 420) from the first and second panning coefficients (310, 320), wherein each replication coefficient of said plurality of replication coefficients (410, 415, 420) is assigned to a sound channel (580, 585, 590) of a plurality of sound channels of the multi channel audio signal (600, 700);

wherein the replication coefficients (410, 415, 420) for the plurality of sound channels (580, 585, 590) are configured for positioning a phantom sound source (811, 812) in a listening area (890) between a plurality of reproducing means (600, 700) for the multi channel audio signal (810, 815, 820, 830, 840);

wherein from the plurality of reproducing means (810, 815, 820, 830, 840) for the multi channel audio signal (600, 700) one reproducing means is assigned to a sound channel of the plurality of sound channels;

Calculating the direct signal (515) with each of the replication coefficients (410, 415, 420) of the plurality of replication coefficients, wherein:

- the direct signal (515), which is offset with a first replication coefficient (410), and the additive first ambient signal (510) is assigned to a first sound channel (580),
- the direct signal (515), which is calculated with a second replication coefficient (415), is assigned to a second sound channel (585), and
- the direct signal (515), which is offset with a third replication coefficient (420), and the additively added second ambient signal (520) is assigned to a third sound channel (590);

Transferring each sound channel (580, 585, 590) into a respective reproduction signal (600, 700) of the multi channel audio signal, wherein each reproduction signal is provided for a respective one reproducing means.

2. The method according to claim 1,
   further comprising the step of:

   Outputting each sound channel (580, 585, 590) to a respective reproduction device (810, 815, 820, 830, 840).

3. The method as claimed in claim 1,
   further comprising the step of:

   Outputting each sound channel (580, 585, 590) to a recording unit.

4. The method as claimed in claim 1,
   wherein a power adjustment of the sound channel takes place in each case before the outputting of each sound channel to a respective reproduction device (810, 815, 820, 830, 840) in such a way that the power of the ambient signal (510, 520) is reduced with respect to the cleared direct signal (515).

5. Method according to one of the preceding claims,
wherein the sum of the first audio signal (110) and the second audio signal (120)
is low pass filtered and represents a low frequency sound channel (760), wherein the
low frequency sound channel (760) is embodied as one of the sound channels of the multi channel audio signal.

6. Method according to one of the preceding claims,
wherein the fourth panning coefficient (360) and the fifth panning coefficient (370) are configured to determine
components contained in the first ambient signal (510) and in the second ambient signal (520) in a sixth ambient
signal (560) and in a seventh ambient signal (570);
wherein the sixth ambient signal and the seventh ambient signal are respectively assigned to one further sound
channel of the multi channel audio signal.

7. Method according to one of the preceding claims,
wherein from the reduced first ambient signal (630) and from the reduced second ambient signal (640) the fourth
panning coefficient (360) and the fifth panning coefficient (370) are iteratively detected;
wherein before each iteration of the determination of the fourth panning coefficient (360) and
of the fifth panning coefficient (370) the first ambient signal (510) and the second ambient signal (520) are reduced
by the components of the direct signal (565).

8. The method as claimed in one of the preceding claims,
wherein the first panning coefficient (310) and the second panning coefficient (320) of the first audio signal (110)
and the second audio signal (120) are calculated for a plurality of frequencies of the stereo audio signal (100, 200).

9. Method according to one of the preceding claims,
wherein the first panning coefficient (310) and the second panning coefficient (320)
of the first audio signal (110) and of the second audio signal (120) are repeatedly determined in each case according
to one defined period of time.

10. A method for generating a multi channel audio signal (600, 700) from a stereo audio signal (100, 200), the method
comprising the steps of:

Transforming a first audio signal (110) and a second audio signal (120) of the stereo audio signal from the time
domain to the frequency domain;
Performing the method according to claim 1 in the frequency domain;
Transform the playback signals from the frequency domain into the time domain.

11. An audio signal processing apparatus for generating a multi channel audio signal (600, 700) from a stereo audio
signal (100) having a first audio signal (110) and a second audio signal (120), the audio signal processing apparatus
comprising:

a panning coefficient calculation unit (20) which is configured:

- to determine a first panning coefficient (310) and a second panning coefficient
(320) from the stereo audio signal (100);
- to determine a first power of the first audio signal (110) and a second power of the
second audio signal (120);
- to determine the autocorrelation of the first audio signal and the second audio signal;
- to determine the cross-correlation of the first audio signal and the second audio signal,
- to determine a similarity function from the ratio of the expectation value of the
cross-correlation and the expected value of the sum of the autocorrelations of the first and second audio
signals,
- to determine a first partial similarity function as the ratio of the cross-correlation of the first and second
audio signals and the autocorrelation of the first audio signal; and
- to determine a second partial similarity function as the ratio of the cross-correlation of the
first audio signal and of the second audio signal and the autocorrelation of the second audio signal;

wherein the first panning coefficient is determined based on the first partial coefficient similarity function and
the second partial coefficient similarity function as well as the similarity function of the first audio signal and the second audio signal and the second panning coefficient is determined based on the first panning coefficients; wherein the first panning coefficient (310) and the second panning coefficient (320)

are configured for positioning a phantom sound source (811, 812) in a listening area (890)

between a left reproduction device (810) and a right reproduction device (820);

a signal extracting unit (40) which is configured to determine a direct signal (515) and a first ambient signal (510) and a second ambient signal (520) from the first audio signal and the second audio signal as well as the first panning coefficients and the second panning coefficient,

wherein an ambient signal corresponds to a reverberation and reflections of the direct signal in a room, respectively;

wherein the audio signal processing device is configured to determine a fourth panning coefficient (360) and a fifth panning coefficient (370) from the first ambient signal (510) and from the second ambient signal (520);

wherein the fourth panning coefficient (360) and the fifth panning coefficient (370) are configured to determine contained components in the ambient signal (520), in the first ambient signal (510) and in the second (565);

wherein the audio signal processing apparatus is configured to reduce the first (510) and the second ambient signal (520) by the components contained in the direct signal (565);

wherein the audio signal processing apparatus is configured to assign the reduced first surround signal (630) to a rear left sound channel (730);

wherein the audio signal processing apparatus is configured to assign the reduced second

surround signal (640) to a rear right sound channel (740);

a replication coefficient calculating unit (30) which is configured to determine a plurality of replication coefficients (410, 415, 420) from the first and second panning coefficients, wherein each replication coefficient of the plurality of replication coefficients is configured to be assigned to a sound channel (580, 585,590) of a plurality of audio channels of the multi channel audio signal;

wherein the repetition coefficients are configured for the plurality of sound channels for positioning a phantom sound source (811, 812) arranged in a listening area (890) between one plurality of reproducing means (810, 815, 820, 830, 840) for said multi channel audio signal, wherein one reproducing means of the plurality of reproducing means for the multi channel audio signal is assignable to a sound channel of the plurality of sound channels;

a billing unit (42) which is designed to generate the direct signal (515) with each of the replication coefficients (410, 415, 420) of the plurality of replication coefficients, wherein:

- the direct signal (515), which is offset with a first replication coefficient (410), and the additive first ambient signal (510) is assigned to a first sound channel (580),
- the direct signal (515), which is calculated with a second replication coefficient (415), is assigned to a second sound channel (585), and
- the direct signal (515), which is offset with a third replication coefficient (420), and the additively added second ambient signal (520) is assigned to a third sound channel (590);

12. An audio signal processing apparatus according to claim 11, further comprising:

- a stereo audio signal transformation unit (10), which is configured to transform the stereo audio signal from the time domain into the frequency domain;
- a scaling unit (50), which is configured to perform a power adjustment for each sound channel of the plurality of sound channels;
- a multi channel audio signal transformation unit (80), which is configured to transform the power adjusted sound channels as adjusted by the scaling unit from the frequency domain into the time domain,

## Revendications

1. Procédé destiné à la génération d'un signal audio multicanal (600, 700) à partir d'un signal audio stéréo (100, 200), dans lequel le signal audio stéréo présente :

- un premier signal audio (110) pour un moyen de restitution (810) situé sur le canal de gauche et
- un deuxième signal audio (120) pour un moyen de restitution (820) situé sur le canal de droite ;

le procédé présentant les phases suivantes :

identification d'une première puissance du premier signal audio (110) et d'une deuxième puissance du deuxième signal audio (120) ;

détermination de l'autocorrélation du premier signal audio et du deuxième signal audio, ainsi que de la corrélation croisée du premier signal audio et du deuxième signal audio ;

identification d'une fonction de similarité à partir du coefficient de l'espérance mathématique de la corrélation croisée et de l'espérance mathématique de la somme des autocorrélations du premier et du deuxième signal audio ;

identification d'une première fonction partielle de similarité comme étant le ratio de la corrélation croisée du premier et du deuxième signal audio et de l'autocorrélation du premier signal audio ;

identification d'une deuxième fonction partielle de similarité comme étant le ratio de la corrélation croisée du premier et du deuxième signal audio et de l'autocorrélation du deuxième signal audio ;

identification d'un premier coefficient de panning (310) et d'un deuxième coefficient de panning (320) du signal audio stéréo, dans lequel le premier coefficient de panning est identifié sur la base de la première et de la deuxième fonction partielle de similarité, ainsi que sur la fonction de similarité du premier et du deuxième signal audio, et dans lequel le deuxième coefficient de panning est identifié sur la base du premier coefficient de panning ;

dans lequel le premier coefficient de panning (310) et le deuxième coefficient de panning (320) sont réalisés en vue de positionner une source acoustique fantôme (811, 812) dans une zone d'écoute (890) entre le moyen de restitution (810) situé sur le canal de gauche et le moyen de restitution (820) situé sur le canal de droite ;

identification d'un signal direct (515) et d'un premier signal ambiant (510) et d'un deuxième signal ambiant (520) à partir du premier signal audio et du deuxième signal audio, ainsi qu'à partir du premier coefficient de panning (310) et du deuxième coefficient de panning (320), dans lequel un signal ambiant correspond à une réverbération et à des réflexions du signal direct dans un espace ;

dans lequel un quatrième coefficient de panning (360) et un cinquième coefficient de panning (370) sont identifiés à partir du premier signal ambiant (510) et du deuxième signal ambiant (520) ;

dans lequel le quatrième coefficient de panning (360) et le cinquième coefficient de panning (370) sont réalisés en vue d'identifier des éléments constitutifs du signal direct (565) qui sont contenus dans le premier signal ambiant (510) et dans le deuxième signal ambiant (520) ;

dans lequel le premier signal ambiant (510) et le deuxième signal ambiant (520) sont réduits respectivement des éléments constitutifs du signal direct (565) qui sont contenus dans ceux-ci ;

dans lequel le premier signal ambiant (630) réduit est associé à un canal de son (730) situé sur le canal de gauche et situé à l'arrière ;

dans lequel le deuxième signal ambiant (640) réduit est associé à un canal de son (740) situé sur le canal de droite et situé à l'arrière ;

identification d'une pluralité de coefficients de repanning (410, 415, 420) à partir du premier et du deuxième coefficient de panning (310, 320), dans lequel chaque coefficient de repanning de la pluralité de coefficients de repanning (410, 415, 420) est associé à un canal de son (580, 585, 590) d'une pluralité de canaux de son du signal audio multicanal (600, 700) ;

dans lequel les coefficients de repanning (410, 415, 420) sont réalisés pour la pluralité de canaux de son (580, 585, 590) en vue de positionner une source acoustique fantôme (811, 812) dans une zone d'écoute (890) entre une pluralité de moyens de restitution (810, 815, 820, 830, 840) pour le signal audio multicanal (600, 700) ;

dans lequel, parmi la pluralité des moyens de restitution (810, 815, 820, 830, 840) pour le signal audio multicanal, un moyen de restitution est associé respectivement à un canal de son de la pluralité des canaux de son ;

compensation du signal direct (515) avec respectivement chacun des coefficients de repanning (410, 415, 420) de la pluralité des coefficients de repanning, dans lequel :

- le signal direct (515) compensé par un premier coefficient de repanning (410) ainsi que le premier signal ambiant (510) ajouté en sus sont associés à un premier canal de son (580) ;
- le signal direct (515) compensé par un deuxième coefficient de repanning (415) est associé à un deuxième canal de son (585) ; et
- le signal direct (515) compensé par un troisième coefficient de repanning (420) ainsi que le deuxième signal ambiant (520) ajouté en sus sont associés à un troisième canal de son (590) ;

transfert de chaque canal de son (580, 585, 590) dans respectivement un signal de restitution (600, 700) du signal audio multicanal, dans lequel chaque signal de restitution est prévu pour respectivement un moyen de restitution.

2. Procédé selon la revendication 1,

présentant en outre la phase suivante :

sortie de chaque canal de son (580, 585, 590) vers respectivement un moyen de restitution (810, 815, 820, 830, 840).

**3.** Procédé selon l'une des revendications 1 ou 2,
présentant en outre la phase suivante :

sortie de chaque canal de son (580, 585, 590) vers une unité d'enregistrement.

**4.** Procédé selon l'une des revendications précédentes,
dans lequel une adaptation de la puissance du canal de son a lieu sur respectivement un moyen de restitution (810, 815, 820, 830, 840), avant la sortie de chaque canal de son (580, 585, 590), de telle sorte que la puissance du signal ambiant (510, 520) est réduite respectivement par rapport au signal direct (515) compensé.

**5.** Procédé selon l'une des revendications précédentes,
dans lequel la somme du premier signal audio (110) et du deuxième signal audio (120) est soumise à un filtrage passe-bas et représente un canal de son à basse fréquence (760), dans lequel le canal de son à basse fréquence (760) est réalisé comme étant l'un des canaux de son du signal audio multicanal.

**6.** Procédé selon l'une des revendications précédentes,
dans lequel le quatrième coefficient de panning (360) et le cinquième coefficient de panning (370) sont réalisés en vue d'identifier des éléments constitutifs d'un sixième signal ambiant (560) et d'un septième signal ambiant (570) qui sont contenus dans le premier signal ambiant (510) et dans le deuxième signal ambiant (520) ;
dans lequel le sixième signal ambiant et le septième signal ambiant sont associés respectivement à un autre canal de son du signal audio multicanal.

**7.** Procédé selon l'une des revendications précédentes,
dans lequel le quatrième coefficient de panning (360) et le cinquième coefficient de panning (370) sont identifiés de manière itérative à partir du premier signal ambiant (630) réduit et à partir du deuxième signal ambiant (640) réduit ;
dans lequel, avant chaque itération de l'identification du quatrième coefficient de panning (360) et du cinquième coefficient de panning (370), le premier signal ambiant (510) et le deuxième signal ambiant (520) sont réduits des éléments constitutifs du signal direct (565) qui sont contenus dans ceux-ci.

**8.** Procédé selon l'une des revendications précédentes,
dans lequel le premier coefficient de panning (310) et le deuxième coefficient de panning (320) du premier signal audio (110) et du deuxième signal audio (120) sont calculés pour un grand nombre de fréquences du signal audio stéréo (100, 200).

**9.** Procédé selon l'une des revendications précédentes,
dans lequel le premier coefficient de panning (310) et le deuxième coefficient de panning (320) du premier signal audio (110) et du deuxième signal audio (120) sont identifiés de nouveau et de manière récurrente respectivement à l'issue d'un intervalle de temps défini.

**10.** Procédé destiné à la génération d'un signal audio multicanal (600, 700) à partir d'un signal audio stéréo (100, 200), le procédé présentant les phases suivantes :

a) transformation d'un premier signal audio (110) et d'un deuxième signal audio (120) du signal audio stéréo à partir de la plage de temps dans la plage de fréquences ;
b) réalisation du procédé selon la revendication 1 dans la plage de fréquences ;
c) transformation des signaux de restitution à partir de la plage de fréquences dans la plage de temps.

**11.** Dispositif de traitement des signaux audio destiné à la génération d'un signal audio multicanal (600, 700) à partir d'un signal audio stéréo (100) avec un premier signal audio (110) et un deuxième signal audio (120),
le dispositif de traitement des signaux audio présentant :

une unité de calcul du coefficient de panning (20), laquelle est réalisée :

- en vue d'identifier un premier coefficient de panning (310) et un deuxième coefficient de panning (320) à partir du signal audio stéréo (100),
- en vue d'identifier une première puissance du premier signal audio (110) et une deuxième puissance du deuxième signal audio (120),
- en vue de déterminer l'autocorrélation du premier signal audio et du deuxième signal audio ainsi que la corrélation croisée du premier signal audio et du deuxième signal audio,
- en vue de déterminer une fonction de similarité à partir du coefficient de l'espérance mathématique de la corrélation croisée et de l'espérance mathématique de la somme des autocorrélations du premier et du deuxième signal audio ,
- en vue d'identifier une première fonction partielle de similarité comme étant le ratio de la corrélation croisée du premier et du deuxième signal audio et de l'autocorrélation du premier signal audio,
- en vue d'identifier une deuxième fonction partielle de similarité comme étant le ratio de la corrélation croisée du premier et du deuxième signal audio et de l'autocorrélation du deuxième signal audio, d'autre part ;

dans lequel le premier coefficient de panning est identifié sur la base de la première et de la deuxième fonction partielle de similarité, ainsi que sur la base de la fonction de similarité du premier et du deuxième signal audio et dans lequel le deuxième coefficient de panning est identifié sur la base du premier coefficient de panning ;

dans lequel le premier coefficient de panning (310) et le deuxième coefficient de panning (320) sont réalisés en vue de positionner une source acoustique fantôme (811, 812) dans une zone d'écoute (890) entre un moyen de restitution (810) situé sur le canal de gauche et un moyen de restitution (820) situé sur le canal de droite ;

une unité d'extraction des signaux (40), laquelle est réalisée en vue d'identifier un signal direct (515) ainsi qu'un premier signal ambiant (510) et un deuxième signal ambiant (520) à partir du premier signal audio et du deuxième signal audio, ainsi qu'à partir du premier coefficient de panning (310) et du deuxième coefficient de panning (320), dans lequel un signal ambiant correspond à une réverbération et à des réflexions du signal direct dans un espace ;

dans lequel le dispositif de traitement des signaux audio est réalisé en vue d'identifier un quatrième coefficient de panning (360) et un cinquième coefficient de panning (370) à partir du premier signal ambiant (510) et du deuxième signal ambiant (520) ;

dans lequel le quatrième coefficient de panning (360) et le cinquième coefficient de panning (370) sont réalisés en vue d'identifier des éléments constitutifs du signal direct (565) qui sont contenus dans le premier signal ambiant (510) et dans le deuxième signal ambiant (520) ;

dans lequel le dispositif de traitement des signaux audio est réalisé en vue de réduire respectivement le premier signal ambiant (510) et le deuxième signal ambiant (520) des éléments constitutifs du signal direct (565) qui sont contenus dans ceux-ci ;

dans lequel le dispositif de traitement des signaux audio est réalisé en vue d'associer le premier signal ambiant (630) réduit à un canal de son (730) situé sur le canal de gauche et situé à l'arrière ;

dans lequel le dispositif de traitement des signaux audio est réalisé en vue d'associer le deuxième signal ambiant (640) réduit à un canal de son (740) situé sur le canal de droite et situé à l'arrière ;

une unité de calcul du coefficient de repanning (30), laquelle est réalisée en vue d'identifier une pluralité de coefficients de repanning (410, 415, 420) à partir du premier et du deuxième coefficient de panning, dans lequel chaque coefficient de repanning de la pluralité de coefficients de repanning est réalisé en vue d'être associé à un canal de son (580, 585, 590) d'une pluralité de canaux de son du signal audio multicanal ;

dans lequel les coefficients de repanning sont réalisés pour la pluralité de canaux de son en vue de positionner une source acoustique fantôme (811, 812) dans une zone d'écoute (890) entre une pluralité de moyens de restitution (810, 815, 820, 830, 840) pour le signal audio multicanal, dans lequel, parmi la pluralité des moyens de restitution pour le signal audio multicanal, un moyen de restitution peut être associé respectivement à un canal de son de la pluralité des canaux de son ;

une unité de compensation (42), laquelle est réalisée en vue de compenser le signal direct avec respectivement chacun des coefficients de repanning de la pluralité de coefficients de repanning, dans lequel :

- le signal direct (515) compensé par un premier coefficient de repanning (410) ainsi que le premier signal ambiant (510) ajouté en sus peuvent être associés à un premier canal de son (580),
- le signal direct (515) compensé par un deuxième coefficient de repanning (415) peut être associé à un deuxième canal de son (585), et
- le signal direct (515) compensé par un troisième coefficient de repanning (420) ainsi que le deuxième signal ambiant (520) ajouté en sus peuvent être associés à un troisième canal de son (590).

12. Dispositif de traitement des signaux audio selon la revendication 11, présentant en outre :

une unité de transformation des signaux audio stéréo (10), laquelle est réalisée en vue de transformer le signal audio stéréo à partir de la plage de temps dans la plage de fréquences ;

une unité de mise à l'échelle (50), laquelle est réalisée en vue de procéder à une adaptation de la puissance de chaque canal de son de la pluralité de canaux de son ;

une unité de transformation des signaux audio multicanaux (80), laquelle est réalisée en vue de transformer dans la plage de temps les canaux de son ajustés selon la puissance par l'unité de mise à l'échelle à partir de la plage de fréquences.

Fig. 1

Fig. 2

Fig. 3

EP 2 891 334 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7567845 B1, AVENDANO CARLOS M

**In der Beschreibung aufgeführte Nicht-Patentliteratur**

- **AVENDANO CARLOS et al.** A Frequency-Domain Approach to Multichannel Upmix. *JAES, AES,* 01. Juli 2004, vol. 52 (7/8), 740-749
- Upmixing stereo audio into 5.1 channel audio for improving audio realism. **CHUN C J et al.** COMMUNICATIONS IN COMPUTER AND INFORMATION SCIENCE. SPRINGER, 01. Januar 2009, vol. 61, 228-235
- Primary-Ambient Signal Decomposition and Vector-Based Localization for Spatial Audio Coding and Enhancement. **GOODWIN M M et al.** 2007 IEEE INTERNATIONAL CONFERENCE ON ACOUSTICS, SPEECH, AND SIGNAL PROCESSING 15-20 APRIL 2007. IEEE, 15. April 2007, I-9